(19) Europäisches Patentamt
European Patent Office
Office européen des brevets

(11) EP 2 000 029 A1

(12) EUROPÄISCHE PATENTANMELDUNG

(43) Veröffentlichungstag:
**10.12.2008 Patentblatt 2008/50**

(21) Anmeldenummer: **07011095.2**

(22) Anmeldetag: **06.06.2007**

(51) Int Cl.:
***A01N 43/56*** *(2006.01)* ***A01N 37/22*** *(2006.01)*
***A01N 61/00*** *(2006.01)* ***A01N 51/00*** *(2006.01)*
***A01N 47/02*** *(2006.01)* ***A01N 43/22*** *(2006.01)*
***A01N 47/22*** *(2006.01)* ***A01N 47/24*** *(2006.01)*
***A01P 7/00*** *(2006.01)*

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Bayer CropScience AG**
**40789 Monheim (DE)**

(72) Erfinder: **Die Erfindernennung liegt noch nicht vor**

(54) **Insektizide und fungizide Wirkstoffkombinationen**

(57) Die neuen Wirkstoffkombinationen aus einem Carboxamid der allgemeinen Formel (I) (Gruppe 1)

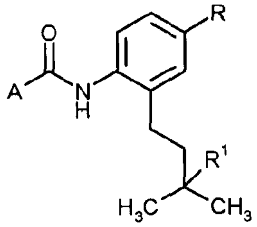

(I)

in welcher
R, $R^1$ und A die in der Beschreibung angegebenen Bedeutungen haben,
und den in der Beschreibung aufgeführten Wirkstoffgruppen (2) bis (24) besitzen sehr gute fungizide, insektizide und akarizide Eigenschaften.

EP 2 000 029 A1

## Beschreibung

Die vorliegende Erfindung betrifft Wirkstoffkombinationen mit fungiziden, insektiziden und akariziden Eigenschaften, die aus bekannten Carboxamiden einerseits und weiteren bekannten insektiziden Wirkstoffen andererseits bestehen und sehr gut zur Bekämpfung von unerwünschten tierischen Schädlingen sowie unerwünschten phytopathogenen Pilzen geeignet sind.

Es ist bereits bekannt, dass bestimmte Carboxamide fungizide Eigenschaften besitzen: z.B. 3-(Difluormethyl)-*N*-[2-(3,3-dimethylbutyl)phenyl]-1-methyl-*1H*-pyrazol-4-carboxamid und 5-Fluor-1,3-dimethyl-*N*-[2-(3-methylbutyl) phenyl]-*1H*-pyrazol-4-carboxamid aus WO 2005/042494. Die Wirksamkeit dieser Stoffe ist gut, lässt aber bei niedrigen Aufwandmengen in manchen Fällen zu wünschen übrig.

Weiterhin ist bekannt, dass zahlreiche Phosphorsäureester, Carbamate, Heterocyclen, OrganozinnVerbindungen, Benzoylharnstoffe und Pyrethroide insektizide und akarizide Eigenschaften besitzen (vgl. z.B. US 2,758,115, US 3,309,266, GB 1,181,657, WO 93/22297 A1, WO 93/10083 A1, DE 26 41 343 A1, EP 347 488 A1, EP 210 487 A1, US 3,264,177 und EP 234 045 A2). Allerdings ist auch die Wirkung dieser Stoffe nicht in allen Belangen befriedigend.

Es wurden nun neue Wirkstoffkombinationen mit sehr guten fungiziden Eigenschaften gefunden, enthaltend ein Carboxamid der allgemeinen Formel (I) (Gruppe 1)

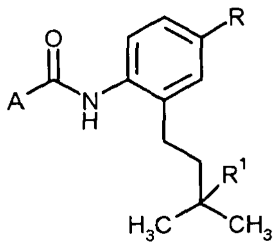 (I),

in welcher

R für Wasserstoff oder Fluor steht,

$R^1$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,

A für einen der folgenden Reste A1 bis A8 steht:

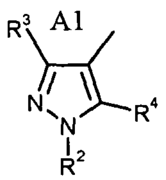 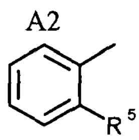 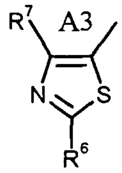 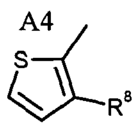

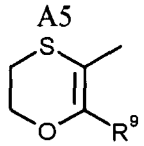 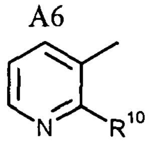 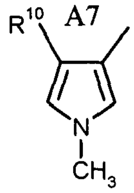 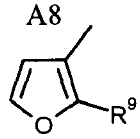

$R^2$ für $C_1$-$C_3$-Alkyl steht,

$R^3$ für Wasserstoff, Halogen, $C_1$-$C_3$-Alkyl oder $C_1$-$C_3$-Halogenalkyl mit 1 bis 7 Fluor-, Chlor- und/ oder Bromatomen

steht,

$R^4$ für Wasserstoff, Halogen oder $C_1$-$C_3$-Alkyl steht,

$R^5$ für Halogen, $C_1$-$C_3$-Alkyl oder $C_1$-$C_3$-Halogenalkyl mit 1 bis 7 Fluor-, Chlor- und/ oder Bromatomen steht,

$R^6$ für Wasserstoff, Halogen, $C_1$-$C_3$-Alkyl, Amino, Mono- oder Di($C_1$-$C_3$-alkyl) amino steht,

$R^7$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,

$R^8$ für Halogen, $C_1$-$C_3$-Alkyl oder $C_1$-$C_3$-Halogenalkyl mit 1 bis 7 Fluor-, Chlor- und/ oder Bromatomen steht,

$R^9$ für Halogen, $C_1$-$C_3$-Alkyl oder $C_1$-$C_3$-Halogenalkyl mit 1 bis 7 Fluor-, Chlor- und/ oder Bromatomen steht,

$R^{10}$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,

und mindestens einen Wirkstoff, der aus den folgenden Gruppen (2) bis (24) ausgewählt ist:

Gruppe (2) Acetylcholin-Rezeptor-Agonisten/-Antagonisten (wie z.B. Chloronicotinyle/Neonicotinoide);

Gruppe (3) Acetylcholinesterase (AChE) Inhibitoren (wie z.B. Carbamate und Organophosphate);

Gruppe (4) Natrium-Kanal-Modulatoren/Spannungsabhängige Natrium-Kanal-Blocker (wie z.B. Pyrethroide und Oxadiazine);

Gruppe (5) Acetylcholin-Rezeptor-Modulatoren (wie z.B. Spinosyne);

Gruppe (6) GABA-gesteuerte Chlorid-Kanal-Antagonisten (wie z.B. cyclodiene Organochlorine und Fiprole);

Gruppe (7) Chlorid-Kanal-Aktivatoren (wie z.B. Mectine);

Gruppe (8) Juvenilhormon-Mimetika;

Gruppe (9) Ecdysonagonisten/disruptoren (wie z.B. Diacylhydrazine);

Gruppe (10) Inhibitoren der Chitinbiosynthese (wie z.B. Benzoylharnstoffe);

Gruppe (11) Inhibitoren der oxidativen Phosphorylierung, ATP-Disruptoren (wie z.B. Organotine);

Gruppe (12) Entkoppler der oxidativen Phoshorylierung durch Unterbrechung des H-Protongradienten (wie z.B. Pyrrole und Dinitrophenole);

Gruppe (13) Seite-I-Elektronentransportinhibitoren (wie z.B. METI's);

Gruppe (14) Seite-II-Elektronentransportinhibitoren;

Gruppe (15) Seite-III-Elektronentransportinhibitoren;

Gruppe (16) Mikrobielle Disruptoren der Insektendarmmembran;

Gruppe (17) Inhibitoren der Fettsynthese (wie z.B. Tetronsäuren und Tetramsäuren);

Gruppe (18) Carboxamide;

Gruppe (19) Oktopaminerge Agonisten;

Gruppe (20) Inhibitoren der Magnesium-stimulierten ATPase;

Gruppe (21) Phthalamide;

Gruppe (22) Nereistoxin-Analoge;

Gruppe (23) Biologika, Hormone oder Pheromone;

Gruppe (24) Wirkstoffe mit unbekannten oder nicht spezifischen Wirkmechanismen (wie z.B. Begasungsmittel, selektive Fraßhemmer und Milbenwachstumsinhibitoren).

Überraschenderweise ist die fungizide, insektizide bzw. akarizide Wirkung der erfindungsgemäßen Wirkstoffkombination wesentlich höher als die Summe der Wirkungen der einzelnen Wirkstoffe. Es liegt daher ein nicht vorhersehbarer synergistischer Effekt vor und nicht nur eine Wirkungsergänzung.

Die erfindungsgemäßen Wirkstoffkombinationen enthalten neben mindestens einem Carboxamid der allgemeinen Formel (I) (Gruppe 1) mindestens einen Wirkstoff ausgewählt aus den Gruppen (2) bis (24).

Die Verbindungen der Gruppe (1) sind durch die Formel (I) allgemein definiert.

Bevorzugt sind Carboxamide der Formel (I), in welcher

$R^1$ für Wasserstoff, Fluor, Chlor, Methyl, Ethyl, n-, iso-Propyl, Monofluormethyl, Difluormethyl, Trifluormethyl, Monochlormethyl, Dichlormethyl oder Trichlormethyl steht,

A für einen der folgenden Reste A1 bis A5 steht:

A1
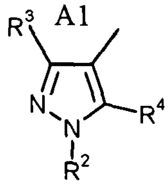
A2
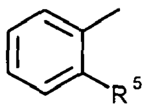
A3
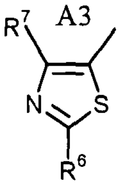
A4
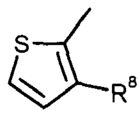
A5
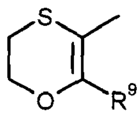

$R^2$ für Methyl, Ethyl, n- oder iso-Propyl steht,

$R^3$ für Iod, Methyl, Difluormethyl oder Trifluormethyl steht,

$R^4$ für Wasserstoff, Fluor, Chlor oder Methyl steht,

$R^5$ für Chlor, Brom, Iod, Methyl, Difluormethyl oder Trifluormethyl steht,

$R^6$ für Wasserstoff, Chlor, Methyl, Amino oder Dimethylamino steht,

$R^7$ für Methyl, Difluormethyl oder Trifluormethyl steht,

$R^8$ für Brom oder Methyl steht,

$R^9$ für Methyl oder Trifluormethyl steht.

Besonders bevorzugt sind Carboxamide der Formel (I), in welcher

$R^1$ für Wasserstoff, Fluor, Chlor, Methyl, Ethyl oder Trifluormethyl steht,
A für einen der folgenden Reste A1 bis A4 steht:

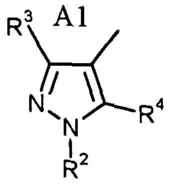 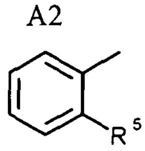 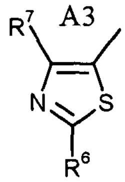 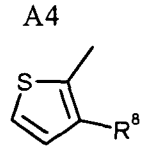

$R^2$ für Methyl oder iso-Propyl steht,
$R^3$ für Methyl, Difluormethyl oder Trifluormethyl steht,
$R^4$ für Wasserstoff oder Fluor steht,
$R^5$ für Iod, Difluormethyl oder Trifluormethyl steht,
$R^6$ für Methyl, Amino oder Dimethylamino steht,
$R^7$ für Methyl, Difluormethyl oder Trifluormethyl steht,
$R^8$ für Methyl steht.

Ganz besonders bevorzugt sind Carboxamide der Formel (I), in welcher

$R^1$ für Wasserstoff oder Methyl steht,
A für einen der folgenden Reste A1 bis A4 steht:

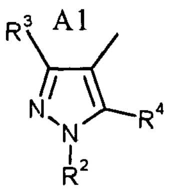 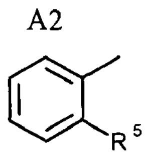 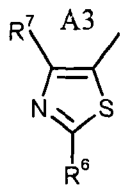 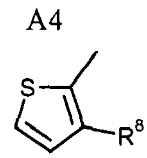

$R^2$ für Methyl steht,
$R^3$ für Methyl oder Difluormethyl steht,
$R^4$ für Wasserstoff oder Fluor steht,
$R^5$ für Iod oder Trifluormethyl steht,
$R^6$ für Methyl steht,
$R^7$ für Trifluormethyl steht,

$R^8$ für Methyl steht.

Die Formel (I) umfasst insbesondere die folgenden bevorzugte Carboxamide der Gruppe (1) (alle bekannt aus WO 2005/042494):

(1-1) 5-Fluor-1,3-dimethyl-*N*-[2-(3-methylbutyl)phenyl]-1*H*-pyrazol-4-carboxamid

(1-2) 3-(Difluormethyl)-*N*-[2-(3,3-dimethylbutyl)-4-fluorphenyl]-1-methyl-1*H*-pyrazol-4-carboxamid

(1-3) 3-(Difluormethyl)-*N*-[2-(3,3-methylbutyl)phenyl]-1-methyl-1*H*-pyrazcl-4-carboxamid

(1-4) *N*-[2-(3,3-Dimethylbutyl)phenyl]-2-(trifluormethyl)benzamid

(1-5) *N*-[2-(3,3-Dimethylbutyl)-4-fluorphenyl]-2-methyl-4-(trifluormethyl)-1,3-thiazol-5-carboxamid

(1-6) *N*-[2-(3,3-Dimethylbutyl)phenyl]-3-methylthiophen-2-carboxamid.

Hervorgehoben sind erfindungsgemäße Wirkstoffkombinationen, die neben dem Carboxamid (1-1) 5-Fluor-1,3-dimethyl-*N*-[2-(3-methylbutyl)phenyl]-*1H*-pyrazol-4-carboxamid (Gruppe 1) einen oder mehrere der folgenden Wirkstoffe (Gruppen 2 bis 24) enthält (2.1) Chloronicotinyle/Neonicotinoide, Acetamiprid, Clothianidin, Dinotefuran, Imidacloprid, Nitenpyram, Nithiazine, Thiacloprid, Thiamethoxam, (2.2) Nicotine, Bensultap, Cartap, (2.1.1) Clothianidin, (2.1.2) Imidacloprid, (2.1.3) Thiacloprid, (2.1.4) Thiamethoxam, (2.1.5) Acetamiprid, (2.1.6) Dinotefuran, (2.1.7) Nitenpyram, (3.1) Carbamate, Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Chloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Phosphocarb, Pirimicarb, Promecarb, Propoxur, Thiodicarb, Thiofanox, Triazamate, Trimethacarb, XMC, Xylylcarb, (3.2) Organophosphate, Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion, (3.1.1) Methiocarb, (3.1.2) Thiodicarb, (3.1.3) Ethiofencarb, (3.1.4) Aldicarb, (3.1.5) Propoxur, (3.2.1) Azinphos-methyl, (3.2.2) Azinphos-ethyl, (3.2.3) Phoxim, (3.2.4) Prothiophos, (4.1.1) Beta-Cyfluthrin, (4.1.2) Cyfluthrin, (4.1.3) Deltamethrin, (4.1.4) Tau-Fluvalinate, (4.2.1) Indoxacarb, (5.1) Spinosyn, (5.1.1) Spinosad, (6.1) Cyclodiene Organochlorine, Camphechlor, Chlordane, Endosulfan, Gamma-HCH, HCH, Heptachlor, Lindane, Methoxychlor), (6.2) Fiprole, Acetoprole, Ethiprole, Fipronil, Vaniliprole, (6.1.1) Endosulfan, (6.2.1)Fipronil, (6.2.2) Ethiprole, (7.1) Mectine, Abamectin, Avermectin, Emamectin, Ivermectin, Milbemectin, Milbemycin, (7.1.1) Emamectin-benzoate, Diofenolan, Epofenonane, Fenoxycarb, Hydroprene, Kinoprene, Methoprene, Pyriproxifen, Triprene, (8.1.1) Pyriproxifen, (9.1) Diacylhydrazine, Chromafenozide, Halofenozide, Methoxyfenozide, Tebufenozide, (9.1.1) Methoxyfenozide, (10.1) Benzoylharnstoffe, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron), (10.2) Buprofezin, (10.3) Cyromazine, (10.1.1) Triflumuron, (10.1.2) Diafenthiuron, (11.2) Organotine, Azocyclotin, Cyhexatin, Fenbutatinoxide), (12.1) Pyrrole, Chlorfenapyr, Dinitrophenole, Binapacyrl, Dinobuton, Dinocap, DNOC, (13.1) METI's, Fenazaquin, Fenpyroximate, Pyrimidifen, Pyridaben, Tebufenpyrad, Tolfenpyrad, (13.2) Hydramethylnone,(13.3) Dicofol, Flufenoxuron, (13.1.1)Tebufenpyrad, (13.2.1) Hydramethylone, (14.1.1)Rotenone, (15.1) Acequinocyl, Fluacrypyrim, (16.1) Bacillus thuringiensis-Stämme, (17.1) Tetronsäuren, Spirodiclofen, Spiromesifen, (17.2) Tetramsäuren, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)}, (17.1.1),Spirodiclofen, (17.1.2) Spiromesifen, (17.2.1) 3-(2,5-Dimethylphenyl)-8-methoxy-2-oxo-l-azaspiro[4.5]dec-3-en-4-yl ethyl carbonate, (18.1.1) Flonicamid, (19.1.1) Amitraz, (20.1.1) Propargite, (21.1.1) $N^2$-[1,1-Dimethyl-2-(methylsulfonyl)ethyl]-3-iod-N'-[2-methyl-4-[1,2,2,2-tetrafluor-1-(trifluormethyl)-ethyl]phenyl]-1,2-benzenedicarboxamide (i.e. Flubendiamide, CAS-Reg.-No.: 272451-65-7), Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec, Begasungsmittel (z.B. Aluminium phosphide, Methyl bromide, Sulfuryl fluoride), (24.2) selektive Fraßhemmer, Cryolite, Flonicamid, Pymetrozine, (24.3) Milbenwachstumsinhibitoren, Clofentezine, Etoxazole, Hexythiazox, (24.4) Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methyl-phenyl-propylcarbamat, Tsumacide Z, 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Hervorgehoben sind erfindungsgemäße Wirkstoffkombinationen, die neben dem Carboxamid (1-2) 3-(Difluormethyl)-*N*-[2-(3,3-dimethylbutyl)-4-fluorphenyl]-1-methyl-1*H*-pyrazol-4-carboxamid (Gruppe 1) einen oder mehrere der folgenden Wirkstoffe (Gruppen 2 bis 24) enthält (2.1) Chloronicotinyle/Neonicotinoide, Acetamiprid, Clothianidin, Dinotefuran, Imidacloprid, Nitenpyram, Nithiazine, Thiacloprid, Thiamethoxam, (2.2) Nicotine, Bensultap, Cartap, (2.1.1) Clothianidin, (2.1.2) Imidacloprid, (2.1.3) Thiacloprid, (2.1.4) Thiamethoxam, (2.1.5) Acetamiprid, (2.1.6) Dinotefuran, (2.1.7) Nitenpyram, (3.1) Carbamate, Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Chloethocarb, Dimetilan,

Ethiofencarb, Fenobucarb, Fenothiocarb, Formetanate, Furathiocarb, Isoprocarb, Metam-sodium, Methiocarb, Methomyl, Metolcarb, Oxamyl, Phosphocarb, Pirimicarb, Promecarb, Propoxur, Thiodicarb, Thiofanox, Triazamate, Trimethacarb, XMC, Xylylcarb, (3.2) Organophosphate, Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Trielorfon, Vamidothion, (3.1.1) Methiocarb, (3.1.2) Thiodicarb, (3.1.3) Ethiofencarb, (3.1.4) Aldicarb, (3.1.5) Propoxur, (3.2.1) Azinphos-methyl, (3.2.2) Azinphos-ethyl, (3.2.3) Phoxim, (3.2.4) Prothiophos, (4.1.1) Beta-Cyfluthrin, (4.1.2) Cyfluthrin, (4.1.3) Deltamethrin, (4.1.4) Tau-Fluvalinate, (4.2.1) Indoxacarb, (5.1) Spinosyn, (5.1.1) Spinosad, (6.1) Cyclodiene Organochlorine, Camphechlor, Chlordane, Endosulfan, Gamma-HCH, HCH, Heptachlor, Lindane, Methoxychlor), (6.2) Fiprole, Acetoprole, Ethiprole, Fipronil, Vaniliprole, (6.1.1) Endosulfan, (6.2.1)Fipronil, (6.2.2) Ethiprole, (7.1) Mectine, Abamectin, Avermectin, Emamectin, Ivermectin, Milbemectin, Milbemycin, (7.1.1) Emamectin-benzoate, Diofenolan, Epofenonane, Fenoxycarb, Hydroprene, Kinoprene, Methoprene, Pyriproxifen, Triprene, (8.1.1) Pyriproxifen, (9.1) Diacylhydrazine, Chromafenozide, Halofenozide, Methoxyfenozide, Tebufenozide, (9.1.1) Methoxyfenozide, (10.1) Benzoylharnstoffe, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron), (10.2) Buprofezin, (10.3) Cyromazine, (10.1.1) Triflumuron, (10.1.2) Diafenthiuron, (11.2) Organotine, Azocyclotin, Cyhexatin, Fenbutatinoxide), (12.1) Pyrrole, Chlorfenapyr, Dinitrophenole, Binapacyrl, Dinobuton, Dinocap, DNOC, (13.1) METI's, Fenazaquin, Fenpyroximate, Pyrimidifen, Pyridaben, Tebufenpyrad, Tolfenpyrad, (13.2) Hydramethylnone,(13.3) Dicofol, Flufenoxuron, (13.1.1)Tebufenpyrad, (13.2.1) Hydramethylone, (14.1.1)Rotenone, (15.1) Acequinocyl, Fluacrypyrim, (16.1) Bacillus thuringiensis-Stämme, (17.1) Tetronsäuren, Spirodiclofen, Spiromesifen, (17.2) Tetramsäuren, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)}, (17.1.1),Spirodiclofen, (17.1.2) Spiromesifen, (17.2.1) 3-(2,5-Dimethylphenyl)-8-methoxy-2-oxo-1-azaspiro[4.5]dec-3-en-4-yl ethyl carbonate, (18.1.1) Flonicamid, (19.1.1) Amitraz, (20.1.1) Propargite, (21.1.1) $N^2$-[1,1-Dimethyl-2-(methylsulfonyl)ethyl]-3-iod-$N^1$-[2-methyl-4-[1,2,2,2-tetrafluor-1-(trifluonnethyl)-ethyl]phenyl]-1,2-benzenedicarboxamide (i.e. Flubendiamide, CAS-Reg.-No.: 272451-65-7), Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec, Begasungsmittel (z.B. Aluminium phosphide, Methyl bromide, Sulfuryl fluoride), (24.2) selektive Fraßhemmer, Cryolite, Flonicamid, Pymetrozine, (24.3) Milbenwachstumsinhibitoren, Clofentezine, Etoxazole, Hexythiazox, (24.4) Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methyl-phenyl-propylcarbamat, Tsumacide Z, 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Hervorgehoben sind erfindungsgemäße Wirkstoffkombinationen, die neben dem Carboxamid (1-3) 3-(Difluormethyl)-*N*-[2-(3,3-dimethylbutyl)phenyl]-1-methyl-1*H*-pyrazol-4-carboxamid (Gruppe 1) einen oder mehrere der folgenden Wirkstoffe (Gruppen 2 bis 24) enthält (2.1) Chloronicotinyle/Neonicotinoide, Acetamiprid, Clothianidin, Dinotefuran, Imidacloprid, Nitenpyram, Nithiazine, Thiacloprid, Thiamethoxam, (2.2) Nicotine, Bensultap, Cartap, (2.1.1) Clothianidin, (2.1.2) Imidacloprid, (2.1.3) Thiacloprid, (2.1.4) Thiamethoxam, (2.1.5) Acetamiprid, (2.1.6) Dinotefuran, (2.1.7) Nitenpyram, (3.1) Carbamate, Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Chloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Phosphocarb, Pirimicarb, Promecarb, Propoxur, Thiodicarb, Thiofanox, Triazamate, Trimethacarb, XMC, Xylylcarb, (3.2) Organophosphate, Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos,

Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion, (3.1.1) Methiocarb, (3.1.2) Thiodicarb, (3.1.3) Ethiofencarb, (3.1.4) Aldicarb, (3.1.5) Propoxur, (3.2.1) Azinphos-methyl, (3.2.2) Azinphos-ethyl, (3.2.3) Phoxim, (3.2.4) Prothiophos, (4.1.1) Beta-Cyfluthrin, (4.1.2) Cyfluthrin, (4.1.3) Deltamethrin, (4.1.4) Tau-Fluvalinate, (4.2.1) Indoxacarb, (5.1) Spinosyn, (5.1.1) Spinosad, (6.1) Cyclodiene Organochlorine, Camphechlor, Chlordane, Endosulfan, Gamma-HCH, HCH, Heptachlor, Lindane, Methoxychlor), (6.2) Fiprole, Acetoprole, Ethiprole, Fipronil, Vaniliprole, (6.1.1) Endosulfan, (6.2.1)Fipronil, (6.2.2) Ethiprole, (7.1) Mectine, Abamectin, Avermectin, Emamectin, Ivermectin, Milbemectin, Milbemycin, (7.1.1) Emamectin-benzoate, Diofenolan, Epofenonane, Fenoxycarb, Hydroprene, Kinoprene, Methoprene, Pyriproxifen, Triprene, (8.1.1) Pyriproxifen, (9.1.) Diacylhydrazine, Chromafenozide, Halofenozide, Methoxyfenozide, Tebufenozide, (9.1.1) Methoxyfenozide, (10.1) Benzoylharnstoffe, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron), (10.2) Buprofezin, (10.3) Cyromazine, (10.1.1) Triflumuron, (10.1.2) Diafenthiuron, (11.2) Organotine, Azocyclotin, Cyhexatin, Fenbutatinoxide), (12.1) Pyrrole, Chlorfenapyr, Dinitrophenole, Binapacyrl, Dinobuton, Dinocap, DNOC, (13.1) METI's, Fenazaquin, Fenpyroximate, Pyrimidifen, Pyridaben, Tebufenpyrad, Tolfenpyrad, (13.2) Hydramethylnone,(13.3) Dicofol, Flufenoxuron, (13.1.1)Tebufenpyrad, (13.2.1) Hydramethylone, (14.1.1)Rotenone, (15.1) Acequinocyl, Fluacrypyrim, (16.1) Bacillus thuringiensis-Stämme, (17.1) Tetronsäuren, Spirodiclofen, Spiromesifen, (17.2) Tetramsäuren, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)}, (17.1.1),Spirodiclofen, (17.1.2) Spiromesifen, (17.2.1) 3-(2,5-Dimethylphenyl)-8-methoxy-2-oxo-1-azaspiro[4.5]dec-3-en-4-yl ethyl carbonate, (18.1.1) Flonicamid, (19.1.1) Amitraz, (20.1.1) Propargite, (21.1.1) $N^2$-[1,1-Dimethyl-2-(methylsulfonyl)ethyl]-3-iod-$N^1$-[2-methyl-4-[1,2,2,2-tetrafluor-1-(trifluormethyl)-ethyl]phenyl]-1,2-benzenedicarboxamide (i.e. Flubendiamide, CAS-Reg.-No.: 272451-65-7), Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec, Begasungsmittel (z.B. Aluminium phosphide, Methyl bromide, Sulfuryl fluoride), (24.2) selektive Fraßhemmer, Cryolite, Flonicamid, Pymetrozine, (24.3) Milbenwachstumsinhibitoren, Clofentezine, Etoxazole, Hexythiazox, (24.4) Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methyl-phenyl-propylcarbamat, Tsumacide Z, 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Hervorgehoben sind erfindungsgemäße Wirkstoffkombinationen, die neben dem Carboxamid (1-4) *N*-[2-(3,3-Dimethylbutyl)phenyl]-2-(trifluormethyl)benzamid (Gruppe 1) einen oder mehrere der folgenden Wirkstoffe (Gruppen 2 bis 24) enthält (2.1) Chloronicotinyle/Neonicotinolde, Acetamiprid, Clothianidin, Dinotefuran, Imidacloprid, Nitenpyram, Nithiazine, Thiacloprid, Thiamethoxam, (2.2) Nicotine, Bensultap, Cartap, (2.1.1) Clothianidin, (2.1.2) Imidacloprid, (2.1.3) Thiacloprid, (2.1.4) Thiamethoxam, (2.1.5) Acetamiprid, (2.1.6) Dinotefuran, (2.1.7) Nitenpyram, (3.1) Carbamate, Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Chloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Phosphocarb, Pirimicarb, Promecarb, Propoxur, Thiodicarb, Thiofanox, Triazamate, Trimethacarb, XMC, Xylylcarb, (3.2) Organophosphate, Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos,

Tetrachlorvinphos, Thiometon, Triazophos, Triclorfon, Vamidothion, (3.1.1) Methiocarb, (3.1.2) Thiodicarb, (3.1.3) Ethiofencarb, (3.1.4) Aldicarb, (3.1.5) Propoxur, (3.2.1) Azinphos-methyl, (3.2.2) Azinphos-ethyl, (3.2.3) Phoxim, (3.2.4) Prothiophos, (4.1.1) Beta-Cyfluthrin, (4.1.2) Cyfluthrin, (4.1.3) Deltamethrin, (4.1.4) Tau-Fluvalinate, (4.2.1) Indoxacarb, (5.1) Spinosyn, (5.1.1) Spinosad, (6.1) Cyclodiene Organochlorine, Camphechlor, Chlordane, Endosulfan, Gamma-HCH, HCH, Heptachlor, Lindane, Methoxychlor), (6.2) Fiprole, Acetoprole, Ethiprole, Fipronil, Vaniliprole, (6.1.1) Endosulfan, (6.2.1)Fipronil, (6.2.2) Ethiprole, (7.1) Mectine, Abamectin, Avermectin, Emamectin, Ivermectin, Milbemectin, Milbemycin, (7.1.1) Emamectin-benzoate, Diofenolan, Epofenonane, Fenoxycarb, Hydroprene, Kinoprene, Methoprene, Pyriproxifen, Triprene, (8.1.1) Pyriproxifen, (9.1) Diacylhydrazine, Chromafenozide, Halofenozide, Methoxyfenozide, Tebufenozide, (9.1.1) Methoxyfenozide, (10.1) Benzoylharnstoffe, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron), (10.2) Buprofezin, (10.3) Cyromazine, (10,1.1) Triflumuron, (10.1.2) Diafenthiuron, (11.2) Organotine, Azocyclotin, Cyhexatin, Fenbutatinoxide), (12.1) Pyrrole, Chlorfenapyr, Dinitrophenole, Binapacyrl, Dinobuton, Dinocap, DNOC, (13.1) METI's, Fenazaquin, Fenpyroximate, Pyrimidifen, Pyridaben, Tebufenpyrad, Tolfenpyrad, (13.2) Hydramethylnone,(13.3) Dicofol, Flufenoxuron, (13.1.1)Tebufenpyrad, (13.2.1) Hydramethylone, (14.1.1)Rotenone, (15.1) Acequinocyl, Fluacrypyrim, (16.1) Bacillus thuringiensis-Stämme, (17.1) Tetronsäuren, Spirodiclofen, Spiromesifen, (17.2) Tetramsäuren, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)}, (17.1.1),Spirodiclofen, (17.1.2) Spiromesifen, (17.2.1) 3-(2,5-Dimethylphenyl)-8-methoxy-2-oxo-1-azaspiro[4.5]dec-3-en-4-yl ethyl carbonate, (18.1.1) Flonicamid, (19.1.1) Amitraz, (20.1.1) Propargite, (21.1.1) $N^2$-[1,1-Dimethyl-2-(methylsulfonyl)ethyl]-3-iod-$N^1$-[2-methyl-4-[1,2,2,2-tetrafluor-1-(trifluormethyl)-ethyl]phenyl]-1,2-benzenedicarboxamide (i.e. Flubendiamide, CAS-Reg.-No.: 272451-65-7), Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec, Begasungsmittel (z.B. Aluminium phosphide, Methyl bromide, Sulfuryl fluoride), (24.2) selektive Fraßhemmer, Cryolite, Flonicamid, Pymetrozine, (24.3) Milbenwachstumsinhibitoren, Clofentezine, Etoxazole, Hexythiazox, (24.4) Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methyl-phenyl-propylcarbamat, Tsumacide Z, 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Hervorgehoben sind erfindungsgemäße Wirkstofflcombinationen, die neben dem Carboxamid (1-5) *N*-[2-(3,3-Dimethylbutyl)-4-fluorphenyl]-2-methyl-4-(trifluormethyl)-1,3-thiazol-5-carboxamid (Gruppe-1) einen oder mehrere der folgenden Wirkstoffe (Gruppen 2 bis 24) enthält (2.1) Chloronicotinyle/Neonicotinoide, Acetamiprid, Clothianidin, Dinotefuran, Imidacloprid, Nitenpyram, Nithiazine, Thiacloprid, Thiamethoxam, (2.2) Nicotine, Bensultap, Cartap, (2.1.1) Clothianidin, (2.1.2) Imidacloprid, (2.1.3) Thiacloprid, (2.1.4) Thiamethoxam, (2.1.5) Acetamiprid, (2.1.6) Dinotefuran, (2.1.7) Nitenpyram, (3.1) Carbamate, Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Chloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Phosphocarb, Pirimicarb, Promecarb, Propoxur, Thiodicarb, Thiofanox, Triazamate, Trimethacarb, XMC, Xylylcarb, (3.2) Organophosphate, Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion, (3.1.1) Methiocarb, (3.1.2) Thiodicarb, (3.1.3) Ethiofencarb, (3.1.4) Aldicarb, (3.1.5) Propoxur, (3.2.1) Azinphos-methyl, (3.2.2) Azinphos-ethyl, (3.2.3) Phoxim, (3.2.4) Prothiophos, (4.1.1) Beta-Cyfluthrin, (4.1.2) Cyfluthrin, (4.1.3) Deltamethrin, (4.1.4) Tau-Fluvalinate, (4.2.1) Indoxacarb, (5.1) Spinosyn, (5.1.1) Spinosad, (6.1) Cyclodiene Organochlorine, Camphechlor, Chlordane, Endosulfan, Gamma-HCH, HCH, Heptachlor, Lindane, Methoxychlor), (6.2) Fiprole, Acetoprole, Ethiprole, Fipronil, Vaniliprole, (6.1.1) Endosulfan, (6.2.1)Fipronil, (6.2.2) Ethiprole, (7.1) Mectine, Abamectin, Avermectin, Emamectin, Ivermectin, Milbemectin, Milbemycin, (7.1.1) Emamectin-benzoate, Diofenolan, Epofenonane, Fenoxycarb, Hydroprene, Kinoprene, Methoprene, Pyriproxifen, Triprene, (8.1.1) Pyriproxifen, (9.1) Diacylhydrazine, Chromafenozide, Halofenozide, Methoxyfenozide, Tebufenozide, (9.1.1) Methoxyfenozide, (10.1) Benzoylharnstoffe, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron), (10.2) Buprofezin, (10.3) Cyromazine, (10.1.1) Triflumuron, (10.1.2) Diafenthiuron, (11.2) Organotine, Azocyclotin, Cyhexatin, Fenbutatinoxide), (12.1) Pyrrole, Chlorfenapyr, Dinitrophenole, Binapacyrl, Dinobuton, Dinocap, DNOC, (13.1) METI's, Fenazaquin, Fenpyroximate, Pyrimidifen, Pyridaben, Tebufenpyrad, Tolfenpyrad, (13.2) Hydramethylnone,(13.3) Dicofol, Flufenoxuron, (13.1.1)Tebufenpyrad, (13.2.1) Hydramethylone, (14.1.1)Rotenone, (15.1) Acequinocyl, Fluacrypyrim, (16.1) Bacillus thuringiensis-Stämme, (17.1) Tetronsäuren, Spirodiclofen, Spiromesifen, (17.2) Tetramsäuren, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)}, (17.1.1),Spirodiclofen, (17.1.2) Spiromesifen, (17.2.1) 3-(2,5-Dimethylphenyl)-8-methoxy-2-oxo-1-azaspiro[4.5]dec-3-en-4-yl ethyl carbonate, (18.1.1) Flonicamid, (19.1.1) Amitraz, (20.1.1) Propargite, (21.1.1) $N^2$-[1,1-Dimethyl-2-(methylsulfonyl)ethyl]-3-iod-$N^1$-[2-methyl-4-[1,2,2,2-tetrafluor-1-(trifluormethyl)-ethyl]phenyl]-1,2-benzenedicarboxamide (i.e. Flubendiamide, CAS-Reg.-No.: 272451-65-7), Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec, Begasungsmittel (z.B. Aluminium phosphide, Methyl bromide, Sulfuryl fluoride), (24.2) selektive Fraßhemmer, Cryolite, Flonicamid, Pymetrozine, (24.3) Milbenwachstumsinhibitoren, Clofentezine, Etoxazole, Hexythiazox, (24.4) Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methyl-phenyl-propylcarbamat, Tsumacide Z, 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Hervorgehoben sind erfindungsgemäße Wirkstoffkombinationen, die neben dem Carboxamid (1-6) *N*-[2-(3,3-Dimethylbutyl)phenyl]-3-methylthiophen-2-carboxamid (Gruppe 1) einen oder mehrere der folgenden Wirkstoffe (Gruppen 2 bis 24) enthält (2.1) Chloronicotinyle/Neonicotinoide, Acetamiprid, Clothianidin, Dinotefuran, Imidacloprid, Nitenpyram, Nithiazine, Thiacloprid, Thiamethoxam, (2.2) Nicotine, Bensultap, Cartap, (2.1.1) Clothianidin, (2.1.2) Imidacloprid, (2.1.3) Thiacloprid, (2.1.4) Thiamethoxam, (2.1.5) Acetamiprid, (2.1.6) Dinotefuran, (2.1.7) Nitenpyram, (3.1) Carbamate, Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Chloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Phosphocarb, Pirimicarb, Promecarb, Propoxur, Thiodicarb, Thiofanox, Triazamate, Trimethacarb, XMC, Xylylcarb, (3.2) Organophosphate, Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion, (3.1.1) Methiocarb, (3.1.2) Thiodicarb, (3.1.3) Ethiofencarb, (3.1.4) Aldicarb, (3.1.5) Propoxur, (3.2.1) Azinphos-methyl, (3.2.2) Azinphos-ethyl, (3.2.3) Phoxim, (3.2.4) Prothiophos, (4.1.1) Beta-Cyfluthrin, (4.1.2) Cyfluthrin, (4.1.3) Deltamethrin, (4.1.4) Tau-Fluvalinate, (4.2.1) Indoxacarb, (5.1) Spinosyn, (5.1.1) Spinosad, (6.1) Cyclodiene Organochlorine, Camphechlor, Chlordane, Endosulfan, Gamma-HCH, HCH, Heptachlor, Lindane, Methoxychlor), (6.2) Fiprole, Acetoprole, Ethiprole, Fipronil, Vaniliprole, (6.1.1) Endosulfan, (6.2.1)Fipronil, (6.2.2) Ethiprole, (7.1) Mectine, Abamectin, Avermectin, Emamectin, Ivermectin, Milbemectin, Milbemycin, (7.1.1) Emamectin-benzoate, Diofenolan, Epofenonane, Fenoxycarb, Hydroprene, Kinoprene, Methoprene, Pyriproxifen, Triprene, (8.1.1) Pyriproxifen, (9.1) Diacylhydrazine, Chromafenozide, Halofenozide, Methoxyfenozide, Tebufenozide, (9.1.1) Methoxyfenozide, (10.1) Benzoylharnstoffe, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron), (10.2) Buprofezin, (10.3) Cyromazine, (10.1.1) Triflumuron, (10.1.2) Diafenthiuron, (11.2) Organotine, Azocyclotin, Cyhexatin, Fenbutatinoxide), (12.1) Pyrrole, Chlorfenapyr, Dinitrophenole, Binapacyrl, Dinobuton, Dinocap, DNOC, (13.1) METI's, Fenazaquin, Fenpyroximate, Pyrimidifen, Pyridaben, Tebufenpyrad, Tolfenpyrad, (13.2) Hydramethylnone, (13.3) Dicofol, Flufenoxuron, (13.1.1)Tebufenpyrad, (13.2.1) Hydramethylone, (14.1.1)Rotenone, (15.1) Acequinocyl, Fluacrypyrim, (16.1) Bacillus thuringiensis-Stämme, (17.1) Tetronsäuren, Spirodiclofen, Spiromesifen, (17.2) Tetramsäuren, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)}, (17.1.1),Spirodiclofen, (17.1.2) Spiromesifen, (17.2.1) 3-(2,5-Dimethylphenyl)-8-methoxy-2-oxo-1-azaspiro[4.5]dec-3-en-4-yl ethyl carbonate, (18.1.1) Flonicamid, (19.1.1) Amitraz, (20.1.1) Propargite, (21.1.1) $N^2$-[1,1-Dimethyl-2-(methylsulfonyl)ethyl]-3-iod-$N^1$-[2-methyl-4-[1,2,2,2-tetrafluor-1-(trifluormethyl)-ethyl]phenyl]-1,2-benzenedicarboxamide (i.e. Flubendiamide, CAS-Reg.-No.: 272451-65-7), Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec, Begasungsmittel (z.B. Aluminium phosphide, Methyl bromide, Sulfuryl fluoride), (24.2) selektive Fraßhemmer, Cryolite, Flonicamid, Pymetrozine, (24.3) Milbenwachstumsinhibitoren, Clofentezine, Etoxazole, Hexythiazox, (24.4) Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methyl-phenyl-propylcarbamat, Tsumacide Z, 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Die Gruppe (2) der Acetylcholin-Rezeptor-Agonisten/-Antagonisten umfasst im Einzelnen folgende Wirkstoffe:

(2.1) Chloronicotinyle/Neonicotinoide (z.B. Acetamiprid, Clothianidin, Dinotefuran, Imidacloprid, Nitenpyram, Nithiazine, Thiacloprid, Thiamethoxam);

(2.2) Nicotine, Bensultap, Cartap.

Die erfindungsgemäßen Wirkstoffkombinationen enthalten bevorzugt folgende Acetylcholin-Rezeptor-Agonisten/-Antagonisten der Gruppe (2):

(2.1.1) Clothianidin

(2.1.2) Imidacloprid

(2.1.3) Thiacloprid

(2.1.4) Thiamethoxam

(2.1.5) Acetamiprid

(2.1.6) Dinotefuran

(2.1.7) Nitenpyram

Die erfindungsgemäßen Wirkstoffkombinationen enthalten besonders bevorzugt folgende Acetylcholin-Rezeptor-Agonisten/-Antagonisten der Gruppe (2):

(2.1.1) Clothianidin

(2.1.2) Imidacloprid

(2.1.3) Thiacloprid

(2.1.4) Thiamethoxam

Die Gruppe (3) der Acetylcholinesterase (AChE) Inhibitoren umfasst im Einzelnen folgende Wirkstoffe:

(3.1) Carbamate (z.B. Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Chloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Phosphocarb, Pirimicarb, Promecarb, Propoxur, Thiodicarb, Thiofanox, Triazamate, Trimethacarb, XMC, Xylylcarb);

(3.2) Organophosphate (z.B. Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion).

Die erfindungsgemäßen Wirkstoffkombinationen enthalten bevorzugt folgende Acetylcholinesterase (AChE) Inhibitoren der Gruppe (3):

(3.1.1) Methiocarb

(3.1.2) Thiodicarb

(3.1.3) Ethiofencarb

(3.1.4) Aldicarb

(3.1.5) Propoxur

(3.2.1) Azinphos-methyl

(3.2.2) Azinphos-ethyl

(3.2.3) Phoxim

(3.2.4) Prothiophos

Die erfindungsgemäßen Wirkstoffkombinationen enthalten besonders bevorzugt folgende Acetylcholinesterase (AChE) Inhibitoren der Gruppe (3):

(3.1.1) Methiocarb

(3.1.2) Thiodicarb

(3.1.3) Ethiofencarb

(3.2.1) Azinphos-methyl

(3.2.2) Azinphos-ethyl

Die Gruppe (4) der Natrium-Kanal-Modulatoren/spannungsabhängige Natrium-Kanal-Blocker umfasst im Einzelnen folgende Wirkstoffe:

(4.1) Pyrethroide [z.B. Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, DDT, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (1R-isomer), Tralocythrin, Tralomethrin, Transfluthrin, ZXI 8901, Pyrethrins (pyrethrum)];

(4.2) Oxadiazine (z.B. Indoxacarb).

Die erfindungsgemäßen Wirkstoffkombinationen enthalten bevorzugt folgende Natrium-Kanal-Modulatoren/ spannungsabhängige Natrium-Kanal-Blocker der Gruppe (4):

(4.1.1) Beta-Cyfluthrin

(4.1.2) Cyfluthrin

(4.1.3) Deltamethrin

(4.1.4) Tau-Fluvalinate

(4.1.5) Eflusilanate

(4.2.1) Indoxacarb

Die erfindungsgemäßen Wirkstoffkombinationen enthalten besonders bevorzugt folgende Natrium-Kanal-Modulatoren/spannungsabhängige Natrium-Kanal-Blocker der Gruppe (4):

(4.1.1) Beta-Cyfluthrin

(4.1.2) Cyfluthrin

(4.1.3) Deltamethrin

(4.1.4) Tau-Fluvalinate

(4.2.1) Indoxacarb

Die Gruppe (5) der Acetylcholin-Rezeptor-Modulatoren umfasst im Einzelnen folgende Wirkstoffe:

(5.1) Spinosyne (z.B. Spinosad).

Die erfindungsgemäßen Wirkstoffkombinationen enthalten bevorzugt folgenden Acetylcholin-Rezeptor-Modulator der Gruppe (5):

(5.1.1) Spinosad

Die Gruppe (6) der GABA-gesteuerte Chlorid-Kanal-Antagonisten umfasst im Einzelnen folgende Wirkstoffe:

(6.1) Cyclodiene Organochlorine (z.B. Camphechlor, Chlordane, Endosulfan, Gamma-HCH, HCH, Heptachlor, Lindane, Methoxychlor);
(6.2) Fiprole (z.B. Acetoprole, Ethiprole, Fipronil, Vaniliprole).

Die erfindungsgemäßen Wirkstoffkombinationen enthalten bevorzugt folgende GABA-gesteuerte Chlorid-Kanal-Antagonisten der Gruppe (6):

(6.1.1) Endosulfan

(6.2.1) Fipronil

(6.2.2) Ethiprole

Die Gruppe (7) der Chlorid-Kanal-Aktivatoren umfasst im Einzelnen folgende Wirkstoffe:

(7.1) Mectine (z.B. Abamectin, Avermectin, Emamectin, Emamectin-benzoate, Ivermectin, Milbemectin, Milbemycin).

Die erfindungsgemäßen Wirkstoffkombinationen enthalten bevorzugt folgenden Chlorid-Kanal-Aktivator der Gruppe (7):

(7.1.1) Emamectin-benzoate

Die Gruppe (8) der Juvenilhormon-Mimetika umfasst im Einzelnen folgende Wirkstoffe:

Diofenolan, Epofenonane, Fenoxycarb, Hydroprene, Kinoprene, Methoprene, Pyriproxifen, Triprene.

Die erfindungsgemäßen Wirkstoffkombinationen enthalten bevorzugt folgendes Juvenilhormon-Mimetikum der Gruppe (8):

(8.1.1) Pyriproxifen

Die Gruppe (9) der Ecdysonagonisten/disruptoren umfasst im Einzelnen folgende Wirkstoffe:

(9.1) Diacylhydrazine (z.B. Chromafenozide, Halofenozide, Methoxyfenozide, Tebufenozide).

Die erfindungsgemäßen Wirkstoffkombinationen enthalten bevorzugt folgenden Ecdysonagonisten/disruptoren der Gruppe (9):

(9.1.1) Methoxyfenozide

Die Gruppe (10) der Inhibitoren der Chitinbiosynthese umfasst im Einzelnen folgende Wirkstoffe:

(10.1) Benzoylharnstoffe (z.B. Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron);

(10.2) Buprofezin;

(10.3) Cyromazine.

Die erfindungsgemäßen Wirkstoffkombinationen enthalten bevorzugt folgende Inhibitoren der Chitinbiosynthese der Gruppe (10):

(10.1.1)Triflumuron

(10.1.2) Flufenoxuron

Die Gruppe (11) der Inhibitoren der oxidativen Phosphorylierung, ATP-Disruptoren umfasst im Einzelnen folgende Wirkstoffe:

(11.1) Diafenthiuron;

(11.2) Organotine (z.B. Azocyclotin, Cyhexatin, Fenbutatin-oxide).

Die Gruppe (12) der Entkoppler der oxidativen Phoshorylierung durch Unterbrechung des H-Protongradienten umfasst im Einzelnen folgende Wirkstoffe:

(12.1) Pyrrole (z.B. Chlorfenapyr);

(12.2) Dinitrophenole (z.B. Binapacyrl, Dinobuton, Dinocap, DNOC).

Die Gruppe (13) der Seite-I-Elektronentransportinhibitoren umfasst im Einzelnen folgende Wirkstoffe:

(13.1) METI's (z.B. Fenazaquin, Fenpyroximate, Pyrimidifen, Pyridaben, Tebufenpyrad, Tolfenpyrad);

(13.2) Hydramethylnone;

(13.3) Dicofol.

Die erfindungsgemäßen Wirkstoffkombinationen enthalten bevorzugt folgende Seite-I-Elektronentransportinhibitoren der Gruppe (13):

(13.1.1)Tebufenpyrad

(13.2.1)Hydramethylone

Die Gruppe (14) der Seite-II-Elektronentransportinhibitoren umfasst im Einzelnen folgenden Wirkstoff:

(14.1.1) Rotenone

Die Gruppe (15) der Seite-III-Elektronentransportinhibitoren umfasst im Einzelnen folgende Wirkstoffe:

(15.1) Acequinocyl, Fluacrypyrim.

Die Gruppe (16) der mikrobiellen Disruptoren der Insektendarmmembran umfasst im Einzelnen folgende Wirkstoffe:

(16.1) Bacillus thuringiensis-Stämme.

Die Gruppe (17) der Inhibitoren der Fettsynthese umfasst im Einzelnen folgende Wirkstoffe:

(17.1) Tetronsäuren (z.B. Spirodiclofen, Spiromesifen);

(17.2) Tetramsäuren {z.B. 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)}.

Die erfindungsgemäßen Wirkstoffkombinationen enthalten bevorzugt folgende Inhibitoren der Fettsynthese der Gruppe (17):

(17.1.1) Spirodiclofen

(17.1.2) Spiromesifen

(17.2.1) 3-(2,5-Dimethylphenyl)-8-methoxy-2-oxo-1-azaspiro[4.5]dec-3-en-4-yl ethyl carbonate

Die Gruppe (18) der Carboxamide umfasst im Einzelnen folgenden Wirkstoff:

(18.1.1)Flonicamid

Die Gruppe (19) der oktopaminergen Agonisten umfasst im Einzelnen folgenden Wirkstoff:

(19.1.1)Amitraz

Die Gruppe (20) der Inhibitoren der Magnesium-stimulierten ATPase umfasst im Einzelnen folgenden Wirkstoff:

(20.1.1)Propargite

Die Gruppe (21) der Phthalamide umfasst im Einzelnen folgenden Wirkstoff:

(21.1.1)$N^2$-[1,1-Dimethyl-2-(methylsulfonyl)ethyl]-3-iod-$N^1$-[2-methyl-4-[1,2,2,2-tetrafluor-1-(trifluormethyl)ethyl] phenyl]-1,2-benzenedicarboxamide (i.e. Flubendiamide, CAS-Reg.-No.: 272451-65-7).

Die Gruppe (22) der Nereistoxin-Analogen umfasst im Einzelnen folgende Wirkstoffe:

Thiocyclam hydrogen oxalate, Thiosultap-sodium.

Die Gruppe (23) der Biologika, Hormone oder Pheromone umfasst im Einzelnen folgende Wirkstoffe:

Azadirachtin, Bacillus spec., Beauveria spec., Codlemone, Metarrhizium spec., Paecilomyces spec., Thuringiensin, Verticillium spec.

Die Gruppe (24) der Wirkstoffe mit unbekannten oder nicht spezifischen Wirkmechanismen umfasst im Einzelnen folgende Wirkstoffe:

(24.1) Begasungsmittel (z.B. Aluminium phosphide, Methyl bromide, Sulfuryl fluoride);

(24.2) Selektive Fraßhemmer (z.B. Cryolite, Flonicamid, Pymetrozine);

(24.3) Milbenwachstumsinhibitoren (z.B. Clofentezine, Etoxazole, Hexythiazox);

(24.4) Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methyl-phenyl-propylcarbamat (Tsumacide Z), die Verbindung 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Hervorgehoben sind die in der folgenden Tabelle 1 angeführten Wirkstoffkombinationen :

**Tabelle 1**

| Wirkstoff der Gruppe (1) | Wirkstoff der Gruppen (2) bis (24) |
|---|---|
| (1-1) 5-Fluor-1,3-dimethyl-N-[2-(3-methylbutyl)-phenyl]-1H-pyrazol-4-carboxamid | (2.1.1) Clothianidin |
| (1-1) 5-Fluor-1,3-dimethyl-N-[2-(3-methylbutyl)-phenyl]-1H-pyrazol-4-carboxamid | (2.1.2) Imidacloprid |
| (1-1) 5-Fluor-1,3-dimethyl-N-[2-(3-methylbutyl)-phenyl]-1H-pyrazol-4-carboxamid | (2.1.3) Thiacloprid |
| (1-1) 5-Fluor-1,3-dimethyl-N-[2-(3-methylbutyl)-phenyl]-1H-pyrazol-4-carboxainid | (2.1.4) Thiamethoxam |
| (1-1) 5-Fluor-1,3-dimethyl-N-[2-(3-methylbutyl)-phenyl]-1H-pyrazol-4-carboxamid | (3.1.1) Methiocarb |
| (1-1) 5-Fluor-1,3-dimethyl-N-[2-(3-methylbutyl)-phenyl]-1H-pyrazol-4-carboxamid | (3.1.2) Thiodicarb |
| (1-1) 5-Fluor-1,3-dimethyl-N-[2-(3-methylbutyl)-phenyl]-1H-pyrazol-4-carboxamid | (3.1.3) Ethiofencarb |

(fortgesetzt)

| Wirkstoff der Gruppe (1) | Wirkstoff der Gruppen (2) bis (24) |
|---|---|
| (1-1) 5-Fluor-1,3-dimethyl-N-[2-(3-methylbutyl)-phenyl]-1H-pyrazol-4-carboxamid | (3.2.1) Azinphos-methyl |
| (1-1) 5-Fluor-1,3-dimethyl-N-[2-(3-methylbutyl)-phenyl]-1H-pyrazol-4-carboxamid | (3.2.2) Azinphos-ethyl |
| (1-1) 5-Fluor-1,3-dimethyl-N-[2-(3-methylbutyl)-phenyl]-1H-pyrazol-4-carboxamid | (4.1.1) Beta-Cyfluthrin |
| (1-1) 5-Fluor-1,3-dimethyl-N-[2-(3-methylbutyl)-phenyl]-1H-pyrazol-4-carboxamid | (4.1.2) Cyfluthrin |
| (1-1) 5-Fluor-1,3-dimethyl-N-[2-(3-methylbutyl)-phenyl]-1H-pyrazol-4-carboxamid | (4.1.3) Deltamethrin |
| (1-1) 5-Fluor-1,3-dimethyl-N-[2-(3-methylbutyl)-phenyl]-1H-pyrazol-4-carboxamid | (4.1.4)Tau-Fluvalinate |
| (1-1) 5-Fluor-1,3-dimethyl-N-[2-(3-methylbutyl)-phenyl]-1H-pyrazol-4-carboxamid | (4.2.1) Indoxacarb |
| (1-1) 5-Fluor-1,3-dimethyl-N-[2-(3-methylbutyl)-phenyl]-1H-pyrazol-4-carboxamid | (5.1.1) Spinosad |
| (1-1) 5-Fluor-1,3-dimethyl-N-[2-(3-methylbutyl)-phenyl]-1H-pyrazol-4-carboxamid | (6.1.1) Endosulfan |
| (1-1) 5-Fluor-1,3-dimethyl-N-[2-(3-methylbutyl)-phenyl]-1H-pyrazol-4-carboxamid | (6.2.1) Fipronil |
| (1-1) 5-Fluor-1,3-dimethyl-N-[2-(3-methylbutyl)-phenyl]-1H-pyrazol-4-carboxamid | (6.2.2) Ethiprole |
| (1-1) 5-Fluor-1,3-dimethyl-N-[2-(3-methylbutyl)-phenyl]-1H-pyrazol-4-carboxamid | (7.1.1) Emamectin-benzoate |
| (1-1) 5-Fluor-1,3-dimethyl-N-[2-(3-methylbutyl)-phenyl]-1H-pyrazol-4-carboxamid | (8.1.1) Pyriproxifen |
| (1-1) 5-Fluor-1,3-dimethyl-N-[2-(3-methylbutyl)-phenyl]-1H-pyrazol-4-carboxamid | (9.1.1) Methoxyfenozide |
| (1-1) 5-Fluor-1,3-dimethyl-N-[2-(3-methylbutyl)-phenyl]-1H-pyrazol-4-carboxamid | (10.1.1) Triflumuron |
| (1-1) 5-Fluor-1,3-dimethyl-N-[2-(3-methylbutyl)-phenyl]-1H-pyrazol-4-carboxamid | (10.1.2) Flufenoxuron |
| (1-1) 5-Fluor-1,3-dimethyl-N-[2-(3-methylbutyl)-phenyl]-1H-pyrazol-4-carboxamid | (13.1.1) Tebufenpyrad |
| (1-1) 5-Fluor-1,3-dimethyl-N-[2-(3-methylbutyl)-phenyl]-1H-pyrazol-4-carboxamid | (13.2.1) Hydramethylone |
| (1-1) 5-Fluor-1,3-dimethyl-N-[2-(3-methylbutyl)-phenyl]-1H-pyrazol-4-carboxamid | (17.1.1) Spirodiclofen |
| (1-1) 5-Fluor-1,3-dimethyl-N-[2-(3-methylbutyl)-phenyl]-1H-pyrazol-4-carboxamid | (17.1.2) Spiromesifen |
| (1-1) 5-Fluor-1,3-dimethyl-N-[2-(3-methylbutyl)-phenyl]-1H-pyrazol-4-carboxamid | (17.2.1) 3-(2,5-Dimethylphenyl)-8-methoxy-2oxo-1-azaspiro[4.5]dec-3-en-4-yl ethyl carbonate |
| (1-1) 5-Fluor-1,3-dimethyl-N-[2-(3-methylbutyl)-phenyl]-1H-pyrazol-4-carboxamid | (18.1.1) Flonicamid |

(fortgesetzt)

| Wirkstoff der Gruppe (1) | Wirkstoff der Gruppen (2) bis (24) |
|---|---|
| (1-1) 5-Fluor-1,3-dimethyl-N-[2-(3-methylbutyl)-phenyl]-1H-pyrazol-4-carboxamid | (21.1.1) Flubendiamide |
| (1-2) 3-(Difluormethyl)-N-[2-(3,3-dimethylbutyl)-4-fluorphenyl]-1-methyl-1H-pyrazol-4-carboxamid | (2.1.1) Clothianidin |
| (1-2) 3-(Difluormethyl)-N-[2-(3,3-dimethylbutyl)-4-fluorphenyl]-1-methyl-1H-pyrazol-4-carboxamid | (2.1.2) Imidacloprid |
| (1-2) 3-(Difluormethyl)-N-[2-(3,3-dimethylbutyl)-4-fluorphenyl]-1-methyl-1H-pyrazol-4-carboxamid | (2.1.3) Thiacloprid |
| (1-2) 3-(Difluormethyl)-N-[2-(3,3-dimethylbutyl)-4-fluorphenyl]-1-methyl-1H-pyrazol-4-carboxamid | (2.1.4) Thiamethoxam |
| (1-2) 3-(Difluormethyl)-N-[2-(3,3-dimethylbutyl)-4-fluorphenyl]-1-methyl-1H-pyrazol-4-carboxamid | (3.1.1) Methiocarb |
| (1-2) 3-(Difluormethyl)-N-[2-(3,3-dimethylbutyl)-4-fluorphenyl]-1-methyl-1H-pyrazol-4-carboxamid | (3.1.2) Thiodicarb |
| (1-2) 3-(Difluormethyl)-N-[2-(3,3-dimethylbutyl)-4-fluorphenyl]-1-methyl-1H-pyrazol-4-carboxamid | (3.1.3) Ethiofencarb |
| (1-2) 3-(Difluormethyl)-N-[2-(3,3-dimethylbutyl)-4-fluorphenyl]-1-methyl-1H-pyrazol-4-carboxamid | (3.2.1) Azinphos-methyl |
| (1-2) 3-(Difluormethyl)-N-[2-(3,3-dimethylbutyl)-4-fluorphenyl]-1-methyl-1H-pyrazol-4-carboxamid | (3.2.2) Azinphos-ethyl |
| (1-2) 3-(Difluormethyl)-N-[2-(3,3-dimethylbutyl)-4-fluorphenyl]-1-methyl-1H-pyrazol-4-carboxamid | (4.1.1) Beta-Cyfluthrin |
| (1-2) 3-(Difluormethyl)-N-[2-(3,3-dimethylbutyl)-4-fluorphenyl]-1-methyl-1H-pyrazol-4-carboxamid | (4.1.2) Cyfluthrin |
| (1-2) 3-(Difluormethyl)-N-[2-(3,3-dimethylbutyl)-4-fluorphenyl]-1-methyl-1H-pyrazol-4-carboxamid | (4.1.3) Deltamethrin |
| (1-2) 3-(Difluormethyl)-N-[2-(3,3-dimethylbutyl)-4-fluorphenyl]-1-methyl-1H-pyrazol-4-carboxamid | (4.1.4) Tau-Fluvalinate |
| (1-2) 3-(Difluormethyl)-N-[2-(3,3-dimethylbutyl)-4-fluorphenyl]-1-methyl-1H-pyrazol-4-carboxamid | (4.2.1) Indoxacarb |
| (1-2) 3-(Difluormethyl)-N-[2-(3,3-dimethylbutyl)-4-fluorphenyl]-1-methyl-1H-pyrazol-4-carboxamid | (5.1.1) Spinosad |
| (1-2) 3-(Difluormethyl)-N-[2-(3,3-dimethylbutyl)-4-fluorphenyl]-1-methyl-1H-pyrazol-4-carboxamid | (6.1.1) Endosulfan |
| (1-2) 3-(Difluormethyl)-N-[2-(3,3-dimethylbutyl)-4-fluorphenyl]-1-methyl-1H-pyrazol-4-carboxamid | (6.2.1) Fipronil |
| (1-2) 3-(Difluormethyl)-N-[2-(3,3-dimethylbutyl)-4-fluorphenyl]-1-methyl-1H-pyrazol-4-carboxamid | (6.2.2) Ethiprole |
| (1-2) 3-(Difluormethyl)-N-[2-(3,3-dimethylbutyl)-4-fluorphenyl]-1-methyl-1H-pyrazol-4-carboxamid | (7.1.1) Emamectin-benzoate |
| (1-2) 3-(Difluormethyl)-N-[2-(3,3-dimethylbutyl)-4-fluorphenyl]-1-methyl-1H-pyrazol-4-carboxamid | (8.1.1) Pyriproxifen |
| (1-2) 3-(Difluormethyl)-N-[2-(3,3-dimethylbutyl)-4-fluorphenyl]-1-methyl-1H-pyrazol-4-carboxamid | (9.1.1) Methoxyfenozide |

(fortgesetzt)

| Wirkstoff der Gruppe (1) | Wirkstoff der Gruppen (2) bis (24) |
|---|---|
| (1-2) 3-(Difluormethyl)-N-[2-(3,3-dimethylbutyl)-4-fluorphenyl]-1-methyl-1H-pyrazol-4-carboxamid | (10.1.1) Triflumuron |
| (1-2) 3-(Difluormethyl)-N-[2-(3,3-dimethylbutyl)-4-fluorphenyl]-1-methyl-1H-pyrazol-4-carboxamid | (10.1.2) Flufenoxuron |
| (1-2) 3-(Difluormethyl)-N-[2-(3,3-dimethylbutyl)-4-fluorphenyl]-1-methyl-1H-pyrazol-4-carboxamid | (13.1.1) Tebufenpyrad |
| (1-2) 3-(Difluormethyl)-N-[2-(3,3-dimethylbutyl)-4-fluorphenyl]-1-methyl-1H-pyrazol-4-carboxamid | (13.2.1) Hydramethylone |
| (1-2) 3-(Difluormethyl)-N-[2-(3,3-dimethylbutyl)-4-fluorphenyl]-1-methyl-1H-pyrazol-4-carboxamid | (17.1.1) Spirodiclofen |
| (1-2) 3-(Difluormethyl)-N-[2-(3,3-dimethylbutyl)-4-fluorphenyl]-1-methyl-1H-pyrazol-4-carboxamid | (17.1.2) Spiromesifen |
| (1-2) 3-(Difluormethyl)-N-[2-(3,3-dimethylbutyl)-4-fluorphenyl]-1-methyl-1H-pyrazol-4-carboxamid | (17.2.1) 3-(2,5-Dimethylphenyl)-8-methoxy-2-oxo-1-azaspiro[4.5]dec-3-en-4-yl ethyl carbonate |
| (1-2) 3-(Difluormethyl)-N-[2-(3,3-dimethylbutyl)-4-fluorphenyl]-1-methyl-1H-pyrazol-4-carboxamid | (18.1.1) Flonicamid |
| (1-2) 3-(Dif!uormethyl)-N-[2-(3,3-dimethylbutyl)-4-fluorphenyl]-1-methyl-1H-pyrazol-4-carboxamid | (21.1.1) Flubendiamide |
| (1-3) 3-(Difluormethyl)-N-[2-(3,3-dimethylbutyl)-phenyl]-1-methyl-1H-pyrazol-4-carboxamid | (2.1.1) Clothianidin |
| (1-3) 3-(Difluormethyl)-N-[2-(3,3-dimethylbutyl)-phenyl]-1-methyl-1H-pyrazol-4-carboxamid | (2.1.2) Imidacloprid |
| (1-3) 3-(Difluormethyl)-N-[2-(3,3-dimethylbutyl)-phenyl]-1-methyl-1H-pyrazol-4-carboxamid | (2.1.3) Thiacloprid |
| (1-3) 3-(Difluormethyl)-N-[2-(3,3-dimethylbutyl)-phenyl]-1-methyl-1H-pyrazol-4-carboxamid | (2.1.4) Thiamethoxam |
| (1-3) 3-(Difluormethyl)-N-[2-(3,3-dimethylbutyl)-phenyl]-1-methyl-1H-pyrazcl-4-carboxamid | (3.1.1) Methiocarb |
| (1-3) 3-(Diffuormethyl)-N-[2-(3,3-dimethylbutyl)phenyl]-1-methyl-1H-pyrazol-4-carboxamid | (3.1.2) Thiodicarb |
| (1-3) 3-(Difluormethyl)-N-[2-(3,3-dimethylbutyl)-phenyl]-1-methyl-1H-pyrazol-4-carboxamid | (3.1.3) Ethiofencarb |
| (1-3) 3-(Difluormethyl)-N-[2-(3,3-dimethylbutyl)-phenyl]-1-methyl-1H-pyrazol-4-carboxamid | (3.2.1) Azinphos-methyl |
| (1-3) 3-(Difluormethyl)-N-[2-(3,3-dimethylbutyl)-phenyl]-1-methyl-1H-pyrazol-4-carboxamid | (3.2.2) Azinphos-ethyl |
| (1-3) 3-(Difluormethyl)-N-[2-(3,3-dimethylbutyl)-phenyl]-1-methyl-1H-pyrazol-4-carboxamid | (4.1.1) Beta-Cyfluthrin |
| (1-3) 3-(Diauormethyl)-N-[2-(3,3-dimethylbutyl)-phenyl]-1-methyl-1H-pyrazol-4-carboxamid | (4.1.2) Cyfluthrin |
| (1-3) 3-(DiRuormethyl)-N-[2-(3,3-dimethylbutyl)-phenyl]-1-methyl-1H-pyrazol-4-carboxamid | (4.1.3) Deltamethrin |

(fortgesetzt)

| Wirkstoff der Gruppe (1) | Wirkstoff der Gruppen (2) bis (24) |
|---|---|
| (1-3) 3-(Difluormethyl)-N-[2-(3,3-dimethylbutyl)-phenyl]-1-methyl-1H-pyrazol-4-carboxamid | (4.1.4) Tau-Fluvalinate |
| (1-3) 3-(Difluormethyl)-N-[2-(3,3-dimethylbutyl)-phenyl]-1-methyl-1H-pyrazol-4-carboxamid | (4.2.1) Indoxacarb |
| (1-3) 3-(Diffuormethyl)-N-[2-(3,3-dimethylbutyl)phenyl]-1-methyl-1H-pyrazol-4-carboxamid | (5.1.1) Spinosad |
| (1-3) 3-(Difluormethyl)-N-[2-(3,3-diinethylbutyl)-phenyl]-1-methyl-1H-pyrazol-4-carboxamid | (6.1.1) Endosulfan |
| (1-3) 3-(Difluormethyl)-N-[2-(3,3-dimethylbutyl)-phenyl]-1-methyl-1H-pyrazol-4-carboxamid | (6.2.1) Fipronil |
| (1-3) 3-(Difluormethyl)-N-[2-(3,3-dimethylbutyl)-phenyl]-1-methyl-1H-pyrazol-4-carboxamid | (6.2.2) Ethiprole |
| (1-3) 3-(Diffuormethyl)-N-[2-(3,3-dimethylbutyl)-phenyl]-1-methyl-1H-pyrazol-4-carboxamid | (7.1.1) Emamectin-benzoate |
| (1-3) 3-(Difluormethyl)-N-[2-(3,3-dimethylbutyl)-phenyl]-1-methyl-1H-pyrazol-4-carboxamid | (8.1.1) Pyriproxifen |
| (1-3) 3-(Difluormethyl)-N-[2-(3,3-dimethylbutyl)-phenyl]-1-methyl-1H-pyrazol-4-carboxamid | (9.1.1) Methoxyfenozide |
| (1-3) 3-(Difluormethyl)-N-[2-(3,3-dimethylbutyl)-phenyl]-1-methyl-1H-pyrazol-4-carboxamid | (10.1.1) Triflumuron |
| (1-3) 3-(Difluormethyl)-N-[2-(3,3-dimethylbutyl)-phenyl]-1-methyl-1H-pyrazol-4-carboxamid | (10.1.2) Flufenoxuron |
| (1-3) 3-(Difluormethyl)-N-[2-(3,3-dimethylbutyl)phenyl]-1-methyl-1H-pyrazol-4-carboxamid | (13.1.1) Tebufenpyrad |
| (1-3) 3-(Difluonnethyl)-N-[2-(3,3-dimethylbutyl)-phenyl]-1-methyl-1H-pyrazol-4-carboxamid | (13.2.1) Hydramethylone |
| (1-3) 3-(Difluormethyl)-N-[2-(3,3-dimethylbutyl)-phenyl]-1-methyl-1H-pyrazol-4-carboxamid | (17.1.1) Spirodiclofen |
| (1-3) 3-(Difluormethyl)-N-[2-(3,3-dimethylbutyl)-phenyl]-1-methyl-1H-pyrazol-4-carboxamid | (17.1.2) Spiromesifen |
| (1-3) 3-(Difluormethyl)-N-[2-(3,3-dimethylbutyl)-phenyl]-1-methyl-1H-pyrazol-4-carboxamid | (17.2.1) 3-(2,5-Dimethylphenyl)-8-methoxy-2-oxo-1-azaspiro[4.5]dec-3-en-4-yl ethyl carbonate |
| (1-3) 3-(Diffuormethyl)-N-[2-(3,3-dimethylbutyl)-phenyl]-1-methyl-1H-pyrazol-4-carboxamid | (18.1.1) Flonicamid |
| (1-3) 3-(Difluormethyl)-N-[2-(3,3-dimethylbutyl)-phenyl]-1-methyl-1H-pyrazol-4-carboxamid | (21.1.1) Flubendiamide |
| (1-4) N-[2-(3,3-Dimethylbutyl)phenyl]-2-(trifluormethyl) benzamid | (2.1.1) Clothianidin |
| (1-4) N-[2-(3,3-Dimethylbutyl)phenyl]-2-(trifluormethyl) benzamid | (2.1.2) Imidacloprid |
| (1-4) N-[2-(3,3-Dimethylbutyl)phenyl]-2-(trifluormethyl) benzamid | (2.1.3) Thiacloprid |

(fortgesetzt)

| Wirkstoff der Gruppe (1) | Wirkstoff der Gruppen (2) bis (24) |
|---|---|
| (1-4) N-[2-(3,3-Dimethylbutyl)phenyl]-2-(trifluormethyl) benzamid | (2.1.4) Thiamethoxam |
| (1-4) N-[2-(3,3-Dimethylbutyl)phenyl]-2-(triffuormethyl) benzamid | (3.1.1)Methiocarb |
| (1-4) N-[2-(3,3-Dimethylbutyl)phenyl]-2-(triffuormethyl) benzamid | (3.1.2) Thiodicarb |
| (1-4) N-[2-(3,3-Dimethylbutyl)phenyl]-2-(trifluormethyl) benzamid | (3.1.3) Ethiofencarb |
| (1-4) N-[2-(3,3-Dimethylbutyl)phenyl]-2-(trifluormethyl) benzamid | (3.2.1) Azinphos-methyl |
| (1-4) N-[2-(3,3-Dimethylbutyl)phenyl]-2-(trifluormethyl) benzamid | (3.2.2) Azinphos-ethyl |
| (1-4) N-[2-(3,3-Dimethylbutyl)phenyl]-2-(trifluormethyl) benzamid | (4.1.1) Beta-Cyfluthrin |
| (1-4) N-[2-(3,3-Dimethylbutyl)phenyl]-2-(trifluormethyl) benzamid | (4.1.2) Cyfluthrin |
| (1-4) N-[2-(3,3-Dimethylbutyl)phenyl]-2-(trifluormethyl) benzamid | (4.1.3) Deltamethrin |
| (1-4) N-[2-(3,3-Dimethylbutyl)phenyl]-2-(trifluormethyl) benzamid | (4.1.4) Tau-Fluvalinate |
| (1-4) N-[2-(3,3-Dimethylbutyl)phenyl]-2-(trifluormethyl) benzamid | (4.2.1) Indoxacarb |
| (1-4) N-[2-(3,3-Dimethylbutyl)phenyl]-2-(trifluormethyl) benzamid | (5.1.1) Spinosad |
| (1-4) N-[2-(3,3-Dimethylbutyl)phenyl]-2-(trifluormethyl) benzamid | (6.1 1) Endosultan |
| (1-4) N-[2-(3,3-Dimethylbutyl)phenyl]-2-(trifluormethyl) benzamid | (6.2.1) Fipronil |
| (1-4) N-[2-(3,3-Dimethylbutyl)phenyl]-2-(trifluormethyl) benzamid | (6.2.2) Ethiprole |
| (1-4) N-[2-(3,3-Dimethylbutyl)phenyl]-2-(trifluormethyl) benzamid | (7.1.1) Emamectin-benzoate |
| (1-4) N-[2-(3,3-Dimethylbutyl)phenyl]-2-(trifluormethyl) benzamid | (8.1.1) Pyriproxyfen |
| (1-4) N-[2-(3,3-Dimethylbutyl)phenyl]-2-(trifluormethyl) benzamid | (9.1.1) Methoxyfenozide |
| (1-4) N-[2-(3,3-Dimethylbutyl)phenyl]-2-(trifluormethyl) benzamid | (10.1.1) Triflumuron |
| (1-4) N-[2-(3,3-Dimethylbutyl)phenyl]-2-(trifluormethyl) benzamid | (10.1.2) Flufenoxuron |
| (1-4) N-[2-(3,3-Dimethylbutyl)phenyl]-2-(trifluormethyl) benzamid | (13.1.1) Tebufenpyrad |
| (1-4) N-[2-(3,3-Dimethylbutyl)phenyl]-2-(trifluormethyl) benzamid | (13.2.1) Hydramethylone |

(fortgesetzt)

| Wirkstoff der Gruppe (1) | Wirkstoff der Gruppen (2) bis (24) |
|---|---|
| (1-4) N-[2-(3,3-Dimethylbutyl)phenyl]-2-(trifluormethyl) benzamid | (17.1.1) Spirodiclofen |
| (1-4) N-[2-(3,3-Dimethylbutyl)phenyl]-2-(trifluormethyl) benzamid | (17.1.2) Spiromesifen |
| (1-4) N-[2-(3,3-Dimethylbutyl)phenyl]-2-(trifluormethyl) benzamid | (17.2.1) 3-(2,5-Dimethylphenyl)-8-methoxy-2-oxo-1-azaspiro[4.5]dec-3-en-4-yl ethyl carbonate |
| (1-4) N-[2-(3,3-Dimethylbutyl)phenyl]-2-(trifluormethyl) benzamid | (18.1.1) Flonicamid |
| (1-4) N-[2-(3,3-Dimethylbutyl)phenyl]-2-(trifluormethyl) benzamid | (21.1.1) Flubendiamide |
| (1-5) N-[2-(3,3-Dimethylbutyl)-4-fluorphenyl]-2-methyl-4-(trifluormethyl)-1,3-thiazol-5-carboxamid | (2.1.1) Clothianidin |
| (1-5) N-[2-(3,3-Dimethylbutyl)-4-fluorphenyl]-2-methyl-4-(trifluormethyl)-1,3-thiazol-5-carboxamid | (2.1.2) Imidacloprid |
| (1-5) N-[2-(3,3-Dimethylbutyl)-4-fluorphenyl]-2-methyl-4-(trifluormethyl)-1,3 thiazol-5-carboxamid | (2.1.3) Thiacloprid |
| (1-5) N-[2-(3,3-Dimethylbutyl)-4-fluorphenyl]-2-methyl-4-(trifluormethyl)-1,3-thiazol-5-carboxamid | (2.1.4) Thiamethoxam |
| (1-5) N-[2-(3,3-Dimethylbutyl)-4-fluorphenyl]-2-methyl-4-(trifluormethyl)-1,3-thiazol-5-carboxamid | (3.1.1) Methiocarb |
| (1-5) N-[2-(3,3-Dimethylbutyl)-4-fluorphenyl]-2-methyl-4-(trifluormethyl)-1,3-thiazol-5-carboxamid | (3.1.2) Thiodicarb |
| (1-5) N-[2-(3,3-Dimethylbutyl)-4-fluorphenyl]-2-methyl-4-(trifluormethyl)-1,3-thiazol-5-carboxamid | (3.1.3) Ethiofencarb |
| (1-5) N-[2-(3,3-Dimethylbutyl)-4-fluorphenyl]-2-methyl-4-(trifluormethyl)-1,3-thiazol-5-carboxamid | (3.2.1) Azinphos-methyl |
| (1-5) N-[2-(3,3-Dimethylbutyl)-4-fluorphenyl]-2-methyl-4-(trifluormethyl)-1,3-thiazol-5-carboxamid | (3.2.2) Azinphos-ethyl |
| (1-5) N-[2-(3,3-Dimethylbutyl)-4-fluorphenyl]-2-methyl-4-(trifluormethyl)-1,3 thiazol-5-carboxamid | (4.1.1) Beta-Cyfluthrin |
| (1-5) N-[2-(3,3-Dimethylbutyl)-4-fluorphenyl]-2-methyl-4-(trifluormethyl)-1,3-thiazol-5-carboxamid | (4.1.2) Cyfluthrin |
| (1-5) N-[2-(3,3-Dimethylbutyl)-4-fluorphenyl]-2-methyl-4-(trifluormethyl)-1,3-thiazol-5-carboxamid | (4.1.3) Deltamethrin |
| (1-5) N-[2-(3,3-Dimethylbutyl)-4-fluorphenyl]-2-methyl-4-(trifluormethyl)-1,3-thiazol-5-carboxamid | (4.1.4) Tau-Fluvalinate |
| (1-5) N-[2-(3,3-Dimethylbutyl)-4-fluorphenyl]-2-methyl-4-(trifluormethyl)-1,3-thiazol-5-carboxamid | (4.2.1) Indoxacarb |
| (1-5) N-[2-(3,3-Dimethylbutyl)-4-fluorphenyl]-2-methyl-4-(trifluormethyl)-1,3-thiazol-5-carboxamid | (5.1.1) Spinosad |
| (1-5) N-[2-(3,3-Dimethylbutyl)-4-fluorphenyl]-2-methyl-4-(trifluormethyl)-1,3-thiazol-5-carboxamid | (6.1.1) Endosulfan |
| (1-5) N-[2-(3,3-Dimethylbutyl)-4-fluorphenyl]-2-methyl-4-(trifluormethyl)-1,3 -thiazol-5 -carboxamid | (6.2.1) Fipronil |

(fortgesetzt)

| Wirkstoff der Gruppe (1) | Wirkstoff der Gruppen (2) bis (24) |
|---|---|
| (1-5) N-[2-(3,3-Dimethylbutyl)-4-fluorphenyl]-2-methyl-4-(trifluormethyl)-1,3 thiazol-5-carboxamid | (6.2.2) Ethiprole |
| (1-5) N-[2-(3,3-Dimethylbutyl)-4-fluorphenyl]-2-methyl-4-(trifluormethyl)-1,3-thiazol-5-carboxamid | (7.1.1) Emamectin-benzoate |
| (1-5) N-[2-(3,3-Dimethylbutyl)-4-fluorphenyl]-2-methyl-4-(trifluormethyl)-1,3-thiazol-5-carboxamid | (8.1.1) Pyriproxyfen |
| (1-5) N-[2-(3,3-Dimethylbutyl)-4-fluorphenyl]-2-methyl-4-(trifluormethyl)-1,3-thiazol-5-carboxamid | (9.1.1) Methoxyfenozide |
| (1-5) N-[2-(3,3-Dimethylbutyl)-4-fluorphenyl]-2-methyl-4-(trifluormethyl)-1,3-thiazol-5-carboxamid | (10.1.1) Triflumuron |
| (1-5) N-[2-(3,3-Dimethylbutyl)-4-fluorphenyl]-2-methyl-4-(trifluormethyl)-1,3-thiazol-5-carboxamid | (10.1.2) Flufenoxuron |
| (1-5) N-[2-(3,3-Dimethylbutyl)-4-fluorphenyl]-2-methyl-4-(trifluormethyl)-1,3 -thiazol-5 -carboxamid | (13.1.1) Tebufenpyrad |
| (1-5) N-[2-(3,3-Dimethylbutyl)-4-fluorphenyl]-2-methyl-4-(trifluormethyl)-1,3-thiazol-5-carboxamid | (13.2.1) Hydramethylone |
| (1-5) N-[2-(3,3-Dimethylbutyl)-4-fluorphenyl]-2-methyl-4-(trifluormethyl)-1,3-thiazol-5-carboxamid | (17.1.1) Spirodiclofen |
| (1-5) N-[2-(3,3-Dimethylbutyl)-4-fluorphenyl]-2-methyl-4-(trifluormethyl)-1,3-thiazol-5-carboxamid | (17.1.2) Spiromesifen |
| (1-5) N-[2-(3,3-Dimethylbutyl)-4-fluorphenyl]-2-methyl-4-(trifluormethyl)-1,3-thiazol-5-carboxamid | (17.2 1) 3-(2,5-Dimethylphenyl)-8-methoxy-2-oxo-1-azaspiro[4.5]dec-3-en-4-yl ethyl carbonate |
| (1-5) N-[2-(3,3-Dimethylbutyl)-4-fluorphenyl]-2-methyl-4-(trifluormethyl)-1,3 thiazol-5-carboxamid | (18.1.1) Flonicamid |
| (1-5) N-[2-(3,3-Dimethylbutyl)-4-fluorphenyl]-2-methyl-4-(trifluormethyl)-1,3-thiazol-5-carboxamid | (21.1.1) Flubendiamide |
| (1-6) N-[2-(3,3-Dimethylbutyl)phenyl]-3-methylthiophen-2-carboxamid | (2.1.1) Clothianidin |
| (1-6) N-[2-(3,3-Dimethylbutyl)phenyl]-3-methylthiophen-2-carboxamid | (2.1.2) Imidacloprid |
| (1-6) N-[2-(3,3-Dimethylbutyl)phenyl]-3-methylthiophen-2-carboxamid | (2.1.3) Thiacloprid |
| (1-6) N-[2-(3,3-Dimethylbutyl)phenyl]-3-methylthiophen-2-carboxamid | (2.1.4) Thiamethoxam |
| (1-6) N-[2-(3,3-Dimethylbutyl)phenyl]-3-methylthiophen-2-carboxamid | (3.1.1) Methiocarb |
| (1-6) N-[2-(3,3-Dimethylbutyl)phenyl]-3-methylthiophen-2-carboxamid | (3.1.2) Thiodicarb |
| (1-6) N-[2-(3,3-Dimethylbutyl)phenyl]-3-methylthiophen-2-carboxamid | (3.1.3) Ethiofencarb |
| (1-6) N-[2-(3,3-Dimethylbutyl)phenyl]-3-methylthiophen-2-carboxamid | (3.2.1) Azinphos-methyl |
| (1-6) N-[2-(3,3-Dimethylbutyl)phenyl]-3-methylthiophen-2-carboxamid | (3.2.2) Azinphos-ethyl |

(fortgesetzt)

| Wirkstoff der Gruppe (1) | Wirkstoff der Gruppen (2) bis (24) |
|---|---|
| (1-6) N-[2-(3,3-Dimethylbutyl)phenyl]-3-methylthiophen-2-carboxamid | (4.1.1) Beta-Cyfluthrin |
| (1-6) N-[2-(3,3-Dimethylbutyl)phenyl]-3-methylthiophen-2-carboxamid | (4.1.2) Cyfluthrin |
| (1-6) N-[2-(3,3-Dimethylbutyl)phenyl]-3-methylthiophen-2-carboxamid | (4.1.3) Deltamethrin |
| (1-6) N-[2-(3,3-Dimethylbutyl)phenyl]-3-methylthiophen-2-carboxamid | (4.1.4) Tau-Fluvalinate |
| (1-6) N-[2-(3,3-Dimethylbutyl)phenyl]-3-methylthiophen-2-carboxamid | (4.2.1) Indoxacarb |
| (1-6) N-[2-(3,3-Dimethylbutyl)phenyl]-3-methylthiophen-2-carboxamid | (5.1.1) Spinosad |
| (1-6) N-[2-(3,3-Dimethylbutyl)phenyl]-3-methylthiophen-2-carboxamid | (6.1.1) Endosulfan |
| (1-6) N-[2-(3,3-Dimethylbutyl)phenyl]-3-methylthiophen-2-carboxamid | (6.2.1) Fipronil |
| (1-6) N-[2-(3,3-Dimethylbutyl)phenyl]-3-methylthiophen-2-carboxamid | (6.2.2) Ethiprole |
| (1-6) N-[2-(3,3-Dimethylbutyl)phenyl]-3-methylthiophen-2-carboxamid | (7.1.1) Emamectin-benzoate |
| (1-6) N-[2-(3,3-Dimethylbutyl)phenyl]-3-methylthiophen-2-carboxamid | (8.1.1) Pyriproxyfen |
| (1-6) N-[2-(3,3-Dimethylbutyl)phenyl]-3-methylthiophen-2-carboxamid | (9.1.1) Methoxyfenozide |
| (1-6) N-[2-(3,3-Dimethylbutyl)phenyl]-3-methylthiophen-2-carboxamid | (10.1.1) Triflumuron |
| (1-6) N-[2-(3,3-Dimethylbutyl)phenyl]-3-methylthiophen-2-carboxamid | (10.1.2) Flufenoxuron |
| (1-6) N-[2-(3,3-Dimethylbutyl)phenyl]-3-methylthiophen-2-carboxamid | (13.1.1)Tebufenpyrad |
| (1-6) N-[2-(3,3-Dimethylbutyl)phenyl]-3-methylthiophen-2-carboxamid | (13.2.1) Hydramethylone |
| (1-6) N-[2-(3,3-Dimethylbutyl)phenyl]-3-methylthiophen-2-carboxamid | (17.1.1) Spirodiclofen |
| (1-6) N-[2-(3,3-Dimethylbutyl)phenyl]-3-methylthiophen-2-carboxamid | (17.1.2) Spiromesifen |
| (1-6) N-[2-(3,3-Dimethylbutyl)phenyl]-3-methylthiophen-2-carboxamid | (17.2.1) 3-(2,5-Dimethylphenyl)-8-methoxy-2-oxo-1-azaspiro[4.5]dec-3-en-4-yl ethyl carbonate |
| (1-6) N-[2-(3,3-Dimethylbutyl)phenyl]-3-methylthiophen-2-carboxamid | (18.1.1) Flonicamid |
| (1-6) N-[2-(3,3-Dimethylbutyl)phenyl]-3-methylthiophen-2-carboxamid | (21.1.1) Flubendiamide |

Die Wirkstoffkombinationen können darüber hinaus auch weitere fungizid, akarizid oder insektizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen enthalten die erfindungsgemäßen Kombinationen Wirkstoffe der Formel (I) und den Mischpartner in den in der nachfolgenden Tabelle angegeben bevorzugten Mischungsverhältnissen, wobei die Mischungsverhältnisse basieren auf Gewichtsverhältnissen.

Das Verhältnis ist zu verstehen als Wirkstoff der Formel (I) (Gruppe 1) : Mischpartner.

**Tabelle 2:** Mischungsverhältnisse

| Mischpartner (Gruppe) | bevorzugtes Mischungsverhältnis | besonders bevorzugtes Mischungsverhältnis |
|---|---|---|
| (2.1) Chloronicotinyle/Neonicotinoide | 500 : 1 bis 1 : 50 | 125 : 1 bis 1 : 25 |
| (2.2) Nicotine, Bensultap, Cartap | 500 : 1 bis 1 : 50 | 125 : 1 bis 1 : 25 |
| (3.1) Carbamate | 500 : 1 bis 1 : 1000 | 125 : 1 bis 1 : 500 |
| (3.2) Organophosphate | 500 : 1 bis 1 : 50 | 125 : 1 bis 1 : 25 |
| (4.1) Pyrethroide | 500 : 1 bis 1 : 50 | 125 : 1 bis 1 : 25 |
| (4.2) Oxadiazine | 500 : 1 bis 1 : 50 | 125 : 1 bis 1 : 25 |
| (5.1) Spinosyne | 500 : 1 bis 1 : 50 | 125 : 1 bis 1 : 25 |
| (6.1) Cyclodiene Organochlorine | 500 : 1 bis 1 : 50 | 125 : 1 bis 1 : 25 |
| (6.2) Fiprole | 500 : 1 bis 1 : 200 | 125 : 1 bis 1 : 50 |
| (7.1) Mectine | 500 : 1 bis 1 : 50 | 125 : 1 bis 1 : 25 |
| (8) Juvenilhormon-Mimetika | 500 : 1 bis 1 : 50 | 125 : 1 bis 1 : 25 |
| (9.1) Diacylhydrazine | 500 : 1 bis 1 : 50 | 125 : 1 bis 1 : 25 |
| (10.1) Benzoylharnstoffe | 500 : 1 bis 1 : 50 | 125 : 1 bis 1 : 25 |
| (10.2) Buprofezin | 500 : 1 bis 1 : 50 | 125 : 1 bis 1 : 25 |
| (10.3) Cyromazine | 500 : 1 bis 1 : 50 | 125 : 1 bis 1 : 25 |
| (11.1) Diafenthiuron | 500 : 1 bis 1 : 50 | 125 : 1 bis 1 : 25 |
| (11.2) Organotine | 500 : 1 bis 1 : 50 | 125 : 1 bis 1 : 25 |
| (12.1) Pyrrole | 500 : 1 bis 1 : 50 | 125 : 1 bis 1 : 25 |
| (12.2) Dinitrophenole | 500 : 1 bis 1 : 50 | 125 : 1 bis 1 : 25 |
| (13.1) METI’s | 500 : 1 bis 1 : 50 | 125 : 1 bis 1 : 25 |
| (13.2) Hydramethylnone | 500 : 1 bis 1 : 50 | 125 : 1 bis 1 : 25 |
| (13.3) Dicofol | 500 : 1 bis 1 : 50 | 125 : 1 bis 1 : 25 |
| (14) Rotenone | 500 : 1 bis 1 : 50 | 125 : 1 bis 1 : 25 |
| (15.1) Acequinocyl, Fluacrypyrim | 500 : 1 bis 1 : 50 | 125 : 1 bis 1 : 25 |
| (16.1) Bacillus thuringiensis-Stämme | 500 : 1 bis 1 : 50 | 125 : 1 bis 1 : 25 |
| (17.1) Tetronsäuren | 500 : 1 bis 1 : 50 | 125 : 1 bis 1 : 25 |
| (17.2) Tetramsäuren | 500 : 1 bis 1 : 50 | 125 : 1 bis 1 : 25 |
| (18) Flonicamid | 500 : 1 bis 1 : 50 | 125 : 1 bis 1: 25 |
| (19) Amitraz | 500 : 1 bis 1 : 50 | 125 : 1 bis 1 : 25 |
| (20) Propargite | 500 : 1 bis 1 : 50 | 125 : 1 bis 1 : 25 |
| (21) Phthalamide | 500 : 1 bis 1 : 50 | 125 : 1 bis 1 : 25 |
| (22) Nereistoxin-Analogen | 500 : 1 bis 1 : 50 | 125 : 1 bis 1 : 25 |

(fortgesetzt)

| Mischpartner (Gruppe) | bevorzugtes Mischungsverhältnis | besonders bevorzugtes Mischungsverhältnis |
|---|---|---|
| (23) Biologika, Hormone, Pheromone | 500 : 1 bis 1 : 50 | 125 : 1 bis 1 : 25 |
| (24.1) Begasungsmittel | 500 : 1 bis 1 : 50 | 125 : 1 bis 1 : 25 |
| (24.2) Selektive Fraßhemmer | 500 : 1 bis 1 : 50 | 125 : 1 bis 1 : 25 |
| (24.3) Milbenwachstumsinhibitoren | 500 : 1 bis 1 : 50 | 125 : 1 bis 1 : 25 |
| (24.4) | 500: 1 bis 1 : 50 | 125 : 1 bis 1 : 25 |

Die erfindungsgemäßen Wirkstoffkombinationen eignen sich zur Bekämpfung von tierischen Schädlingen, vorzugsweise Arthropoden und Nematoden, insbesondere Nematoden und Insekten, die in der Landwirtschaft, der Tiergesundheit, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp.

Aus der Ordnung der Phthiraptera z.B. Pediculus humanus corporis, Haematopinus spp., Linognathus spp., Trichodectes spp., Damalinia spp.

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofinannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp.

Aus der Ordnung der Siphonaptera z.B. Xenopsylla cheopis, Ceratophyllus spp.

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp.

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

Die erfindungsgemäßen Wirkstofflcombinationen wirken nicht nur gegen Pflanzen-, Hygiene- und Vorratsschädlinge, sondern auch auf dem veterinärmedizinischen Sektor gegen tierische Parasiten (Ektoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp.

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp.

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp.

Aus der Ordnung der Siphonapterida z.B. Pulex spp., Ctenocephalides spp., Xenopsylla spp., Ceratophyllus spp.

Aus der Ordnung der Heteropterida z.B. Cimex spp., Triatoma spp., Rhodnius spp., Panstrongylus spp.

Aus der Ordnung der Blattarida z.B. Blatta orientalis, Periplaneta americana, Blattela germanica, Supella spp.

Aus der Unterklasse der Acaria (Acarida) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Stemostoma spp., Varroa spp.

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp.

Die erfindungsgemäßen Wirkstoffkombinationen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Wirkstoffkombmationen eine wirtschaftlichere und einfachere Tierhaltung möglich ist.

Die Anwendung der erfindungsgemäßen Wirkstoffkombinationen geschieht im Veterinärsektor in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spoton), des Waschens, des Einpuderns sowie mit Hilfe von wirkstoffhaltigen Formkörpern, wie Halsbändern, Ohrmarken, Schwanzmarken, Gliedmaßenbändern, Halftern, Markierungsvorrichtungen usw.

Bei der Anwendung für Vieh, Geflügel, Haustiere etc. kann man die Wirkstoffkombinationen als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, dass die erfindungsgemäßen Wirkstoffkombinationen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus.

Hautflügler wie Sirex juvencus, Urocerus gigas, Urocerus gigas taignus, Urocerus augur.

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus.

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Ganz besonders bevorzugt handelt es sich bei dem vor Insektenbefall zu schützenden Material um Holz und Holzverarbeitungsprodukte.

Unter Holz und Holzverarbeitungsprodukten, welche durch das erfindungsgemäße Mittel bzw. dieses enthaltende Mischungen geschützt werden kann, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzverkleidungen, Holzfenster und -türen, Sperrholz, Spanplatten, Tischlerarbeiten oder Holzprodukte, die ganz allgemein beim Hausbau oder in der Bautischlerei Verwendung finden.

Die Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit mindestens einem Lösungs- bzw. Verdünnungsmittel, Emulgator, Dispergier- und/ oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Außerdem weisen die erfindungsgemäßen Wirkstoffkombinationen eine starke mikrobizide Wirkung auf und können zur Bekämpfung von unerwünschten Mikroorganismen, wie Fungi und Bakterien, im Pflanzenschutz und im Materialschutz eingesetzt werden.

Fungizide lassen sich Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Beispielhaft aber nicht abschließend seien einige Erreger von pilzlichen und bakteriellen Erkrankungen, die unter die oben aufgezählten Oberbegriffe fallen, genannt:

Erkrankungen, hervorgerufen durch Erreger des Echten Mehltaus wie z.B.
Blumeria-Arten, wie beispielsweise Blumeria graminis;
Podosphaera-Arten, wie beispielsweise Podosphaera leucotricha;
Sphaerotheca-Arten, wie beispielsweise Sphaerotheca fuliginea;
Uncinula-Arten, wie beispielsweise Uncinula necator;
Erkrankungen, hervorgerufen durch Erreger von Rostkrankheiten wie z.B.
Gymnosporangium-Arten, wie beispielsweise Gymnosporangium sabinae
Hemileia-Arten, wie beispielsweise Hemileia vastatrix;
Phakopsora-Arten, wie beispielsweise Phakopsora pachyrhizi und Phakopsora meibomiae;
Puccinia-Arten, wie beispielsweise Puccinia recondita;
Uromyces-Arten, wie beispielsweise Uromyces appendiculatus;
Erkrankungen, hervorgerufen durch Erreger der Gruppe der Oomyceten wie z.B.
Bremia-Arten, wie beispielsweise Bremia lactucae;
Peronospora-Arten, wie beispielsweise Peronospora pisi oder P. brassicae;
Phytophthora-Arten, wie beispielsweise Phytophthora infestans;
Plasmopara-Arten, wie beispielsweise Plasmopara viticola;
Pseudoperonospora-Arten, wie beispielsweise Pseudoperonospora humuli oder Pseudoperonospora cubensis;
Pythium-Arten, wie beispielsweise Pythium ultimum;
Blattfleckenkrankheiten und Blattwelken, hervorgerufen durch z.B.
Alternaria-Arten, wie beispielsweise Alternaria solani;
Cercospora-Arten, wie beispielsweise Cercospora beticola;
Cladiosporum-Arten, wie beispielsweise Cladiosporium cucumerinum;
Cochliobolus-Arten, wie beispielsweise Cochliobolus sativus (Konidienform: Drechslera, Syn: Helminthosporium);
Colletotrichum-Arten, wie beispielsweise Colletotrichum lindemuthanium;
Cycloconium-Arten, wie beispielsweise Cycloconium oleaginum;
Diaporthe-Arten, wie beispielsweise Diaporthe citri;
Elsinoe-Arten, wie beispielsweise Elsinoe fawcettii;
Gloeosporium-Arten, wie beispielsweise Gloeosporium laeticolor;
Glomerella-Arten, wie beispielsweise Glomerella cingulata;

Guignardia-Arten, wie beispielsweise Guignardia bidwelli;
Leptosphaeria-Arten, wie beispielsweise Leptosphaeria maculans;
Magnaporthe-Arten, wie beispielsweise Magnaporthe grisea;
Mycosphaerella-Arten, wie beispielsweise Mycosphaerella graminicola;
Phaeosphaeria-Arten, wie beispielsweise Phaeosphaeria nodorum;
Pyrenophora-Arten, wie beispielsweise Pyrenophora teres;
Ramularia-Arten, wie beispielsweise Ramularia collo-cygni;
Rhynchosporium-Arten, wie beispielsweise Rhynchosporium secalis;
Septoria-Arten, wie beispielsweise Septoria apii;
Typhula-Arten, wie beispielsweise Typhula incarnata;
Venturia-Arten, wie beispielsweise Venturia inaequalis;
Wurzel- und Stengelkrankheiten, hervorgerufen durch z.B.
Corticium-Arten, wie beispielsweise Corticium graminearum;
Fusarium-Arten, wie beispielsweise Fusarium oxysporum;
Gaeumannomyces-Arten, wie beispielsweise Gaeumannomyces graminis;
Rhizoctonia-Arten, wie beispielsweise Rhizoctonia solani;
Tapesia-Arten, wie beispielsweise Tapesia acuformis;
Thielaviopsis-Arten, wie beispielsweise Thielaviopsis basicola;
Ähren- und Rispenerkrankungen (inklusive Maiskolben), hervorgerufen durch z.B.
Alternaria-Arten, wie beispielsweise Alternaria spp.;
Aspergillus-Arten, wie beispielsweise Aspergillus flavus;
Cladosporium-Arten, wie beispielsweise Cladosporium spp.;
Claviceps-Arten, wie beispielsweise Claviceps purpurea;
Fusarium-Arten, wie beispielsweise Fusarium culmorum;
Gibberella-Arten, wie beispielsweise Gibberella zeae;
Monographella-Arten, wie beispielsweise Monographella nivalis;
Erkrankungen, hervorgerufen durch Brandpilze wie z.B.
Sphacelotheca-Arten, wie beispielsweise Sphacelotheca reiliana;
Tilletia-Arten, wie beispielsweise Tilletia caries;
Urocystis-Arten, wie beispielsweise Urocystis occulta;
Ustilago-Arten, wie beispielsweise Ustilago nuda;
Fruchtfäule hervorgerufen durch z.B.
Aspergillus-Arten, wie beispielsweise Aspergillus flavus;
Botrytis-Arten, wie beispielsweise Botrytis cinerea;
Penicillium-Arten, wie beispielsweise Penicillium expansum;
Sclerotinia-Arten, wie beispielsweise Sclerotinia sclerotiorum;
Verticilium-Arten, wie beispielsweise Verticilium alboatrum;
Samen- und bodenbürtige Fäulen und Welken, sowie Sämlingserkrankungen, hervorgerufen durch z.B.
Fusarium-Arten, wie beispielsweise Fusarium culmorum;
Phytophthora Arten, wie beispielsweise Phytophthora cactorum;
Pythium-Arten, wie beispielsweise Pythium ultimum;
Rhizoctonia-Arten, wie beispielsweise Rhizoctonia solani;
Sclerotium-Arten, wie beispielsweise Sclerotium rolfsii;
Krebserkrankungen, Gallen und Hexenbesen, hervorgerufen durch z.B.
Nectria-Arten, wie beispielsweise Nectria galligena;
Welkeerkrankungen hervorgerufen durch z.B.
Monilinia-Arten, wie beispielsweise Monilinia laxa;
Deformationen von Blättern, Blüten und Früchten, hervorgerufen durch z.B.
Taphrina-Arten, wie beispielsweise Taphrina deformans;
Degenerationserkrankungen holziger pflanzen, hervorgerufen durch z.B.
Esca-Arten, wie beispielsweise Phaemoniella clamydospora;
Blüten- und Samenerkrankungen, hervorgerufen durch z.B.
Botrytis-Arten, wie beispielsweise Botrytis cinerea;
Erkrankungen von Pflanzenknollen, hervorgerufen durch z.B.
Rhizoctonia-Arten, wie beispielsweise Rhizoctonia solani;
Erkrankungen, hervorgerufen durch bakterielle Erreger wie z.B.
Xanthomonas-Arten, wie beispielsweise Xanthomonas campestris pv. oryzae;
Pseudomonas-Arten, wie beispielsweise Pseudomonas syringae pv. lachrymans;

Erwinia-Arten, wie beispielsweise Erwinia amylovora;
Bevorzugt können die folgenden Krankheiten von Soja-Bohnen bekämpft werden:

Pilzkrankheiten an Blättern, Stängehi, Schoten und Samen verursacht durch z.B.

Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi), Scab (Sphaceloma glycines), Stemphylium Leaf Blight (Stemphylium botryosum), Target Spot (Corynespora cassiicola)

Pilzkrankheiten an Wurzeln und der Stängelbasis verursacht durch z.B.

Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Die gute Pflanzenverträglichkeit der Wirkstoffkombinationen in den zur Bekämpfung von Pflanzenkrankheiten notwendigen Konzentrationen erlaubt eine Behandlung von ganzen Pflanzen (oberirdische Pflanzenteile und Wurzeln), von Pflanz- und Saatgut, und des Bodens. Die erfindungsgemäßen Wirkstoffkombinationen können zur Blattapplikation oder auch als Beizmittel eingesetzt werden.

Die gute Pflanzenverträglichkeit der verwendbaren Wirkstoffe in den zur Bekämpfung von Pflanzenkrankheiten notwendigen Konzentrationen erlaubt eine Behandlung des Saatguts. Die erfindungsgemäßen Wirkstoffe können somit als Beizmittel eingesetzt werden.

Ein großer Teil des durch phytopathogene Pilze verursachten Schadens an Kulturpflanzen entsteht bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von phytopathogenen Pilzen, die Pflanzen nach dem Auflaufen schädigen, erfolgt in erster Linie durch die Behandlung des Bodens und der oberirdischen Pflanzenteile mit Pflanzenschutzmitteln. Aufgrund der Bedenken hinsichtlich eines möglichen Einflusses der Pflanzenschutzmittel auf die Umwelt und die Gesundheit von Menschen und Tieren gibt es Anstrengungen, die Menge der ausgebrachten Wirkstoffe zu vermindern.

Die Bekämpfung von phytopathogenen Pilzen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Saatgut und die keimende Pflanze vor dem Befall durch phytopathogene Pilze bestmöglich geschützt wird, ohne jedoch die Pflanze selbst durch den eingesetzten Wirkstoff zu schädigen. Insbesondere sollten Verfahren zur Behandlung von Saatgut auch die intrinsischen fungiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von phytopathogenen Pilzen, indem das Saatgut mit einem erfindungsgemäßen Mittel behandelt wird.

Die Erfindung bezieht sich ebenfalls auf die Verwendung der erfindungsgemäßen Mittel zur Behandlung von Saatgut zum Schutz des Saatguts und der keimenden Pflanze vor phytopathogenen Pilzen.

Weiterhin bezieht sich die Erfindung auf Saatgut, welches zum Schutz vor phytopathogenen Pilzen mit einem erfindungsgemäßen Mittel behandelt wurde.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen vor phytopathogenen Pilzen schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Mischungen insbesondere auch bei transgenem Saatgut eingesetzt werden können.

Die erfindungsgemäßen Mittel eignen sich zum Schutz von Saatgut jeglicher Pflanzensorte, die in der Landwirtschaft, im Gewächshaus, in Forsten oder im Gartenbau eingesetzt wird. Insbesondere handelt es sich dabei um Saatgut von Getreide (wie Weizen, Gerste, Roggen, Hirse und Hafer), Mais, Baumwolle, Soja, Reis, Kartoffeln, Sonnenblume, Bohne, Kaffee, Rübe (z.B. Zuckerrübe und Futterrübe), Erdnuss, Gemüse (wie Tomate, Gurke, Zwiebeln und Salat), Rasen und Zierpflanzen. Besondere Bedeutung kommt der Behandlung des Saatguts von Getreide (wie Weizen, Gerste, Roggen und Hafer), Mais und Reis zu.

Im Rahmen der vorliegenden Erfindung wird das erfindungsgemäßes Mittel alleine oder in einer geeigneten Formulierung auf das Saatgut aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.

Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Die erfindungsgemäßen Wirkstoffkombinationen weisen auch eine starke stärkende Wirkung in Pflanzen auf Sie eignen sich daher zur Mobilisierung pflanzeneigener Abwehrkräfte gegen Befall durch unerwünschte Mikroorganismen.

Unter pflanzenstärkenden (resistenzinduzierenden) Stoffen sind im vorliegenden Zusammenhang solche Substanzen zu verstehen, die in der Lage sind, das Abwehrsystem von Pflanzen so zu stimulieren, dass die behandelten Pflanzen bei nachfolgender Inokulation mit unerwünschten Mikroorganismen weitgehende Resistenz gegen diese Mikroorganismen entfalten.

Die erfindungsgemäßen Wirkstoffe können gegebenenfalls in bestimmten Konzentrationen und Aufwandmengen auch als Herbizide, zur Beeinflussung des Pflanzenwachstums, sowie zur Bekämpfung von tierischen Schädlingen verwendet werden. Sie lassen sich gegebenenfalls auch als Zwischen- und Vorprodukte für die Synthese weiterer Wirkstoffe einsetzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen. Dabei können die Wirkstoffkombinationen vor der Behandlung durch Mischen der einzelnen Wirkstoffe herstellt werden. Oder die Behandlung erfolgt nacheinander durch Einsatz zunächst eines Carboxamids der Gruppe (1) gefolgt von der Behandlung mit einem Wirkstoff der Gruppen

(2) bis (24). Es ist jedoch auch möglich die Pflanzen oder Pflanzenteile zunächst mit einem Wirkstoff der Gruppen (2) bis (24) zu behandeln und die Behandlung mit einem Carboxamid Gruppe (1) anzuschließen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die erfindungsgemäßen Wirkstoffkombinationen können in Abhängigkeit von ihren jeweiligen physikalischen und/oder chemischen Eigenschaften in die üblichen Formulierungen überführt werden, wie Lösungen, Emulsionen, Suspensionen, Pulver, Stäubemittel, Schäume, Pasten, lösliche Pulver, Granulate, Aerosole, Suspensions-Emulsions-Konzentrate, Wirkstoff-imprägnierte Natur- und synthetische Stoffe sowie Feinstverkapselungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im Wesentlichen infrage: Aromaten, wie Xylol, Toluol

oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser.

Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid.

Als feste Trägerstoffe kommen infrage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier- und/oder schaumerzeugende Mittel kommen infrage: z.B, nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Der Wirkstoffgehalt der aus den handelsüblichen Formulierungen bereiteten Anwendungsformen kann in weiten Bereichen variieren. Die Wirkstoffkonzentration der Anwendungsformen zum Bekämpfen tierischer Schädlingen wie Insekten und Akariden kann von 0,0000001 bis zu 95 Gew.-% Wirkstoff, vorzugsweise zwischen 0,0001 und 1 Gew.-% liegen. Die Anwendung geschieht in einer den Anwendungsformen angepassten üblichen Weise.

Die Formulierungen zur Bekämpfung unerwünschter phytopathogener Pilze enthalten im Allgemeinen zwischen 0,1 und 95 Gew.-% Wirkstoffe, vorzugsweise zwischen 0,5 und 90 %.

Die erfindungsgemäßen Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver, Stäubemittel und Granulate, angewendet werden. Die Anwendung geschieht in üblicher Weise, z.B. durch Gießen (drenchen), Tröpfchenbewässerung, Verspritzen, Versprühen, Verstreuen, Verstäuben, Verschäumen, Bestreiche, Verstreichen, Trockenbeizen, Feuchtbeizen, Nassbeizen, Schlämmbeizen, Inkrustieren usw.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende fungizide Wirkung für eine gegebene Kombination zweier Wirkstoffe kann nach S.R. Colby ("Calculating Synergistic and Antagonistic Responses of Herbicide Combinations", Weeds 1967, 15, 20-22) wie folgt berechnet werden:

Wenn

X den *Wirkungsgrad* beim Einsatz des Wirkstoffes A in einer Aufwandmenge von *m g/ha* bedeutet,

Y den *Wirkungsgrad* beim Einsatz des Wirkstoffes B in einer Aufwandmenge von *n g/ha* bedeutet und

E den *Wirkungsgrad* beim Einsatz der Wirkstoffe A und B in Aufwandmengen von *m und* n *g/ha* bedeutet,

dann ist

$$E = X + Y - \frac{X \times Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Die Erfindung wird durch die folgenden Beispiele veranschaulicht. Die Erfindung ist jedoch nicht auf die Beispiele limitiert.

**Anwendungsbeispiele**

Die gute fungizide Wirkung der erfindungsgemäßen Wirkstoffkombinationen geht aus dem nachfolgenden Beispiel hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von m g/ha bedeutet,

Y den Wirkungsgrad beim Einsatz des Wirkstoffes B in einer Aufwandmenge von n g/ha bedeutet und

E den Wirkungsgrad beim Einsatz der Wirkstoffe A und B in Aufwandmengen von m und n g/ha bedeutet,

dann ist

$$E = X + Y - \frac{X \times Y}{100}$$

Dabei wird der Wirkungsgrad in % ermittelt. Es bedeutet 0% ein Wirkungsgrad, der demjenigen der Kontrolle

entspricht, während ein Wirkungsgrad von 100% bedeutet, daß kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Die Erfindung wird durch die folgenden Beispiele veranschaulicht.

## Beispiel A

### *Botrytis cinerea* -Test (in vitro) / Microtiterplatten

Der Microtest wird in Mikrotiterplatten mit Potato-Dextrose Broth (PDB) als flüssigem Versuchsmedium durchgeführt. Die Anwendung der Wirkstoffe erfolgt als technisches a.i., gelöst in Aceton. Zur Inokulation wird eine Sporensuspension von *Botrytis cinerea* verwendet. Nach 3 Tagen Inkubation bei Dunkelheit und unter Schütteln (10 Hrz) wird die Lichtdurchlässigkeit in jeder gefüllten Kavität der Mikrotiterplatten mit Hilfe eines Spectrophotometers ermittelt.

Dabei bedeutet 0 % ein Wirkungsgrad, der dem Wachstum in den Kontrollen entspricht, während ein Wirkungsgrad von 100 % bedeutet, daß kein Pilzwachstum beobachtet wird.

Aus der nachfolgenden Tabelle geht eindeutig hervor, daß die gefundene Wirkung der erfindungsgemäßen Wirkstoffkombination größer ist als die berechnete, d.h., daß ein synergistischer Effekt vorliegt.

**TABELLE A**

| ***Botrytis cinerea* -Test (in vitro) / Microtest** | | | | |
|---|---|---|---|---|
| Wirkstoff<br>Bekannt: | Aufwandmenge an Wirkstoff in ppm | | | % Wirkungsgrad |
| Carboxamid (1-3) | 0.01 | | | 25 |
| Clothianidin | 0.01 | | | 17 |
| Erfindungsgemäße Mischung: | | | | |
| | Mischungsverhältnis | Aufwandmenge an Wirkstoff in ppm | tatsächlicher Wirkungsgrad | Erwartungswert, berechnet mit Colby-Formel |
| Carboxamid (1-3) | | 0.01 | | |
| + | **1:1** | + | **40** | **38** |
| Clothianidin | | | | |
| | | 0.01 | | |

## Beispiel B

### *Botrytis cinerea* -Test (in vitro) / Microtiterplatten

Der Microtest wird in Mikrotiterplatten mit Potato-Dextrose Broth (PDB) als flüssigem Versuchsmedium durchgeführt. Die Anwendung der Wirkstoffe erfolgt als technisches a.i., gelöst in Aceton. Zur Inokulation wird eine Sporensuspension von *Botrytis cinerea* verwendet. Nach 3 Tagen Inkubation bei Dunkelheit und unter Schütteln (10 Hrz) wird die Lichtdurchlässigkeit in jeder gefüllten Kavität der Mikrotiterplatten mit Hilfe eines Spectrophotometers ermittelt.

Dabei bedeutet 0 % ein Wirkungsgrad, der dem Wachstum in den Kontrollen entspricht, während ein Wirkungsgrad von 100 % bedeutet, daß kein Pilzwachstum beobachtet wird.

Aus der nachfolgenden Tabelle geht eindeutig hervor, daß die gefundene Wirkung der erfindungsgemäßen Wirkstoffkombination größer ist als die berechnete, d.h., daß ein synergistischer Effekt vorliegt.

**TABELLE B**

| ***Botrytis cinerea* -Test (in vitro) / Microtest** | | | | |
|---|---|---|---|---|
| Wirkstoff<br>Bekannt: | Aufwandmenge an Wirkstoff in ppm | | | % Wirkungsgrad |
| Carboxamid (1-3) | 0.0003 | | | 17 |
| Imidacloprid | 0.0003 | | | 30 |
| Erfindungsgemäße Mischung: | | | | |
| | Mischungsverhältnis | Aufwandmenge Wirkstoff ppm | tatsächlicher an Wirkungsgrad in | Erwartungswert, berechnet mit Colby-Formel |
| Carboxamid (1-3) **+** Imidacloprid | **1:1** | 0.0003<br>+<br>0.0003 | **74** | **42** |

Beispiel C

**Myzus persicae -Test**

Lösungsmittel: 7 Gewichtsteile Dimethylformamid
Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter *(Brassica oleracea),* die stark von der Grünen Pfirsichblattlaus *(Myzus persicae)* befallen sind, werden durch Tauchen in die Wirkstoffzubereitung der gewünschten Konzentration behandelt.
Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel (siehe Blatt 1).
Bei diesem Test zeigt z. B. die folgende Wirkstoffkombination gemäß vorliegender Anmeldung eine synergistisch verstärkte Wirksamkeit im Vergleich zu den einzeln angewendeten Wirkstoffen:

**Tabelle C**

| Pflanzenschädigende Insekten<br>**Myzus persicae - Test** | | | | |
|---|---|---|---|---|
| Wirkstoff | Konzentration an Wirkstoff in ppm | | | Abtötung in % nach $4^d$ |
| Bekannt: | | | | |
| **Carboxamid (1-3)** | 200 | | | 0 |
| **Clothianidin** | 0,8 | | | 0 |
| **Fipronil** | 0,16 | | | 0 |
| **Methiocarb** | 20 | | | 25 |
| Erfindungsgemäße Mischung: | | | | |
| | Mischungsverhältnis | Aufwandmenge an Wirkstoff in ppm | tatsächlicher Wirkungsgrad | Erwartungswert, berechnet mit Colby-Formel |
| Carboxamid (1-3) + **Clothianidin** | 250:1 | 200+0.8 | **99** | **30** |

(fortgesetzt)

| Erfindungsgemäße Mischung: | Mischungsverhältnis | Aufwandmenge an Wirkstoff in ppm | tatsächlicher Wirkungsgrad | Erwartungswert, berechnet mit Colby-Formel |
|---|---|---|---|---|
| Carboxamid (1-3) + **Fipronil** | 1250: 1 | 200 + 0,16 | **30** | **0** |
| Carboxamid (1-3)+ **Methiocarb** | 10:1 | 200+20 | **45** | **25** |

**Beispiel D**

**Phaedon cochleariae -Test**

Lösungsmittel: 7 Gewichtsteile Dimethylformamid

Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter *(Brassica oleracea)* werden durch Tauchen in die Wirkstoffzubereitung der gewünschten Konzentration behandelt und mit Larven des Meerrettichblattkäfers *(Phaedon cochleariae)* besetzt, solange die Blätter noch feucht sind.

Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden.

Bei diesem Test zeigte die folgende Wirkstoffkombination gemäß vorliegender Anmeldung eine synergistisch verstärkte Wirksamkeit im Vergleich zu den einzelnen angewendeten Wirkstoffen:

**Tabelle D**

Pflanzenschädigende Insekten

**Phaedon cochleariae -Test**

| Wirkstoff Bekannt: | Konzentration an Wirkstoff in ppm | Abtötung in % nach 4$^{d}$ | | |
|---|---|---|---|---|
| **Carboxamid (1-3)** | 200 | 0 | | |
| **Clothianidin** | 0,8 | 0 | | |
| **Imidacloprid** | 20 | | | 80 |
| Thiodicarb | 100 | | | 0 |
| Erfindungsgemäße Mischung: | | | | |
| | Mischungsverhältnis | Aufwandmenge an Wirkstoff in ppm | tatsächlicher Wirkungsgrad | Erwartungswert, berechnet mit Colby-Formel |
| Carboxamid (1-3) + **Clothianidin** | 250:1 | 200+0.8 | **95** | **0** |
| Carboxamid (1-3) + **Imidacloprid** | 10 : 1 | 200 + 20 | **100** | **85** |
| Carboxamid (1-3)+ **Thiodicarb** | 2:1 | 200+100 | **25** | **0** |

Beispiel E

Plutella xylostella -Test

Lösungsmittel: 7 Gewichtsteile Dimethylformamid

Emulgator: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Tauchen in die Wirkstoffzubereitung der gewünschten Konzentration behandelt und mit Larven der Kohlmotte (*Plutella xylostella*) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Bei diesem Test zeigte die folgende Wirkstoffkombination gemäß vorliegender Anmeldung eine synergistisch verstärkte Wirksamkeit im Vergleich zu den einzelnen angewendeten Wirkstoffen:

**Tabelle E**

| | | | | |
|---|---|---|---|---|
| Pflanzenschädigende Insekten | | | | |
| **Plutella xylostella - Test** | | | | |
| Wirkstoff | Konzentration an Wirkstoff in ppm | | | Abtötung in % nach |
| Bekannt: | | | | $4^d$ |
| **Carboxamid (1-3)** | 200 | | | 10 |
| **Spinosad** | 0,032 | | | 55 |
| Erfindungsgemäße Mischung: | | | | |
| | Mischungsverhältnis | Aufwandmenge an Wirkstoff in ppm | tatsächlicher Wirkungsgrad | Erwartungswert, berechnet mit Colby-Formel |
| Carboxamid (1-3) + **Spinosad** | 6250: 1 | 200+0.032 | **100** | **59,5** |

**Patentansprüche**

**1.** Fungizide, insektizide und akarizide Wirkstoffkombinationen enthaltend ein Carboxamid der allgemeinen Formel (I) (Gruppe 1)

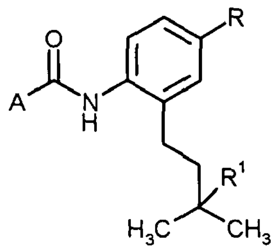

(I),

in welcher

R für Wasserstoff oder Fluor steht,
$R^1$ für Wasserstoff, Halogen, $C_1$-$C_3$-Alkyl oder $C_1$-$C_3$-Halogenalkyl mit 1 bis 7 Fluor-, Chlor- und/oder Bromatomen steht,
A für einen der folgenden Reste A1 bis A8 steht:

A1 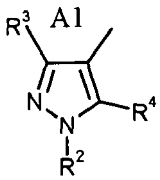 A2 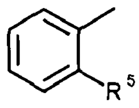 A3 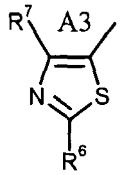 A4 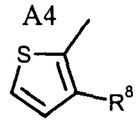

A5 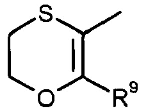 A6 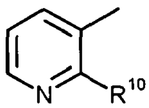 A7 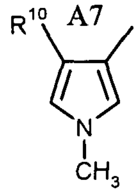 A8 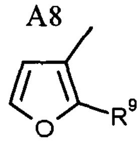

$R^2$ für $C_1$-$C_3$-Alkyl steht,
$R^3$ für Wasserstoff, Halogen, $C_1$-$C_3$-Alkyl oder $C_1$-$C_3$-Halogenalkyl mit 1 bis 7 Fluor-, Chlor- und/oder Bromatomen steht,
$R^4$ für Wasserstoff, Halogen oder $C_1$-$C_3$-Alkyl steht,
$R^5$ für Halogen, $C_1$-$C_3$-Alkyl oder $C_1$-$C_3$-Halogenalkyl mit 1 bis 7 Fluor-, Chlor- und/oder Bromatomen steht,
$R^6$ für Wasserstoff, Halogen, $C_1$-$C_3$-Alkyl, Amino, Mono- oder Di($C_1$-$C_3$-alkyl)amino steht,
$R^7$ für Wasserstoff, Halogen, $C_1$-$C_3$-Alkyl oder $C_1$-$C_3$-Halogenalkyl mit 1 bis 7 Fluor-, Chlor- und/oder Bromatomen steht,
$R^8$ für Halogen, $C_1$-$C_3$-Alkyl oder $C_1$-$C_3$-Halogenalkyl mit 1 bis 7 Fluor-, Chlor- und/oder Bromatomen steht,
$R^9$ für Halogen, $C_1$-$C_3$-Alkyl oder $C_1$-$C_3$-Halogenalkyl mit 1 bis 7 Fluor-, Chlor- und/oder Bromatomen steht,
$R^{10}$ für Wasserstoff, Halogen, $C_1$-$C_3$-Alkyl oder $C_1$-$C_3$-Halogenalkyl mit 1 bis 7 Fluor-, Chlor- und/ oder Bromatomen steht,

und mindestens einen Wirkstoff, der aus den folgenden Gruppen (2) bis (24) ausgewählt ist:

Gruppe (2) Acetylcholin-Rezeptor-Agonisten/-Antagonisten (bevorzugt Chloronicotinyle/ Neonicotinoide);
Gruppe (3) Acetylcholinesterase (AChE) Inhibitoren (bevorzugt Carbamate und Organophosphate);
Gruppe (4) Natrium-Kanal-Modulatoren/Spannungsabhängige Natrium-Kanal-Blocker (bevorzugt Pyrethroide und Oxadiazine);
Gruppe (5) Acetylcholin-Rezeptor-Modulatoren (bevorzugt Spinosyne);
Gruppe (6) GABA-gesteuerte Chlorid-Kanal-Antagonisten (bevorzugt cyclodiene Organochlorine und Fiprole);
Gruppe (7) Chlorid-Kanal-Aktivatoren (bevorzugt Mectine);
Gruppe (8) Juvenilhormon-Mimetika;
Gruppe (9) Ecdysonagonisten/disruptoren (bevorzugt Diacylhydrazine);
Gruppe (10) Inhibitoren der Chitinbiosynthese (bevorzugt Benzoyihamstoffe);
Gruppe (11) Inhibitoren der oxidativen Phosphorylierung, ATP-Disruptoren (bevorzugt Organotine);
Gruppe (12) Entkoppler der oxidativen Phoshorylierung durch Unterbrechung des H-Protongradienten (bevorzugt Pyrrole und Dinitrophenole);
Gruppe (13) Seite-I-Elektronentransportinhibitoren (bevorzugt METI's);
Gruppe (14) Seite-II-Elektronentransportinhibitoren;
Gruppe (15) Seite-III-Elektronentransportinhibitoren;
Gruppe (16) Mikrobielle Disruptoren der Insektendarmmembran;
Gruppe (17) Inhibitoren der Fettsynthese (bevorzugt Tetronsäuren und Tetramsäuren);
Gruppe (18) Carboxamide;
Gruppe (19) Oktopaminerge Agonisten;
Gruppe (20) Inhibitoren der Magnesium-stimulierten ATPase;
Gruppe (21) Phthalamide;
Gruppe (22) Nereistoxin-Analoge;
Gruppe (23) Biologika, Hormone oder Pheromone;
Gruppe (24) Wirkstoffe mit unbekannten oder nicht spezifischen Wirkmechanismen (bevorzugt Begasungsmittel, selektive Fraßhemmer und Milbenwachstumsinhibitoren).

**2.** Wirkstoffkombinationen gemäß Anspruch 1 enthaltend ein Carboxamid der allgemeinen Formel (I) gemäß Anspruch 1 (Gruppe 1), in welcher

$R^1$ für Wasserstoff, Fluor, Chlor, Methyl, Ethyl, n-, iso-Propyl, Monofluormethyl, Difluormethyl, Trifluormethyl, Monochlormethyl, Dichlormethyl oder Trichlormethyl steht,
A für einen der folgenden Reste A1 bis A5 steht:

A1 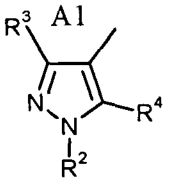 A2 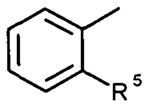 A3 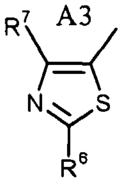 A4 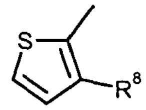 A5 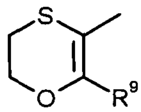

$R^2$ für Methyl, Ethyl, n- oder iso-Propyl steht,
$R^3$ für Iod, Methyl, Difluormethyl oder Trifluormethyl steht,
$R^4$ für Wasserstoff, Fluor, Chlor oder Methyl steht,
$R^5$ für Chlor, Brom, Iod, Methyl, Difluormethyl oder Trifluormethyl steht,
$R^6$ für Wasserstoff, Chlor, Methyl, Amino oder Dimethylamino steht,
$R^7$ für Methyl, Difluormethyl oder Trifluormethyl steht,
$R^8$ für Brom oder Methyl steht,
$R^9$ für Methyl oder Trifluormethyl steht.

**3.** Wirkstoffkombinationen gemäß Anspruch 1, wobei die Wirkstoffe der Gruppen (2) bis (24) aus der folgenden Liste ausgewählt sind:

(2.1) Chloronicotinyle/Neonicotinoide (bevorzugt Acetamiprid, Clothianidin, Dinotefuran, Imidacloprid, Nitenpyram, Nithiazine, Thiacloprid, Thiamethoxam);
(2.2) Nicotine, Bensultap, Cartap;
(3.1) Carbamate (bevorzugt Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Chloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Phosphocarb, Pirimicarb, Promecarb, Propoxur, Thiodicarb, Thiofanox, Triazamate, Trimethacarb, XMC, Xylylcarb);
(3.2) Organophosphate (bevorzugt Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion);
(4.1) Pyrethroide [bevorzugt Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, DDT, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrm, Tetramethrin (1R-isomer), Tralocythrin, Tralomethrin, Transfluthrin, ZXI 8901, Pyrethrins (pyrethrum)];
(4.2) Oxadiazine (bevorzugt Indoxacarb);

(5.1) Spinosyne (bevorzugt Spinosad);
(6.1) Cyclodiene Organochlorine (bevorzugt Camphechlor, Chlordane, Endosulfan, Gamma-HCH, HCH, Heptachlor, Lindane, Methoxychlor);
(6.2) Fiprole (bevorzugt Acetoprole, Ethiprole, Fipronil, Vaniliprole);
(7.1) Mectine (bevorzugt Abamectin, Avermectin, Emamectin, Emamectin-benzoate, Ivermectin, Milbemectin, Milbemycin);
(8) Juvenilhormon-Mimetika (bevorzugt Diofenolan, Epofenonane, Fenoxycarb, Hydroprene, Kinoprene, Methoprene, Pyriproxifen, Triprene);
(9.1) Diacylhydrazine (bevorzugt Chromafenozide, Halofenozide, Methoxyfenozide, Tebufenozide);
(10.1) Benzoylharnstoffe (bevorzugt Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron);
(10.2) Buprofezin;
(10.3) Cyromazine;
(11.1) Diafenthiuron;
(11.2) Organotine (bevorzugt Azocyclotin, Cyhexatin, Fenbutatin-oxide);
(12.1) Pyrrole (bevorzugt Chlorfenapyr);
(12.2) Dinitrophenole (bevorzugt Binapacyrl, Dinobuton, Dinocap, DNOC);
(13.1) METI's (bevorzugt Fenazaquin, Fenpyroximate, Pyrimidifen, Pyridaben, Tebufenpyrad, Tolfenpyrad);
(13.2) Hydramethylnone;
(13.3) Dicofol;
(14.1.1) Rotenone;
(15.1) Acequinocyl, Fluacrypyrim;
(16.1) Bacillus thuringiensis-Stämme;
(17.1) Tetronsäuren (bevorzugt Spirodiclofen, Spiromesifen);
(17.2) Tetramsäuren {bevorzugt 3-(2,5-Dimethylphenyl)-8-methoxy-2-oxo-1-azaspiro[4.5]dec-3-en-4-yl ethyl carbonate};
(18.1.1) Flonicamid;
(19.1.1) Amitraz;
(20.1.1) Propargite;
(21.1.1) $N^2$-[1,1-Dimethyl-2-(methylsulfonyl)ethyl]-3-iod-$N^1$-[2-methyl-4-[1,2,2,2-tetrafluor-1-(trifluormethyl)ethyl]phenyl]-1,2-benzenedicarboxamide;
(22) Thiocyclam hydrogen oxalate, Thiosultap-sodium;
(23) Azadirachtin, Bacillus spec., Beauveria spec., Codlemone, Metarrhizium spec., Paecilomyces spec., Thuringiensin, Verticillium spec.;
(24.1) Begasungsmittel (bevorzugt Aluminium phosphide, Methyl bromide, Sulfuryl fluoride);
(24.2) Selektive Fraßhemmer (bevorzugt Cryolite, Flonicamid, Pymetrozine);
(24.3) Milbenwachstumsinhibitoren (bevorzugt Clofentezine, Etoxazole, Hexythiazox);
(24.4) Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin, ferner die Verbindung 3-Methyl-phenyl-propylcarbamat (Tsumacide Z), die Verbindung 3-(5-Chlor-3-pyridinyl)-8-(2,2,2-trifluorethyl)-8-azabicyclo[3.2.1]octan-3-carbonitril, sowie Präparate, welche insektizid wirksame Pflanzenextrakte, Nematoden, Pilze oder Viren enthalten.

**4.** Wirkstoffkombinationen gemäß einem der Ansprüche 1 bis 3, wobei die Wirkstoffe der Gruppen (2) bis (24) aus der folgenden Liste ausgewählt sind:

(2.1.1) Clothianidin
(2.1.2) Imidacloprid
(2.1.3) Thiacloprid
(2.1.4) Thiamethoxam
(2.1.5) Acetamiprid
(2.1.6) Dinotefuran
(2.1.7) Nitenpyram
(3.1.1) Methiocarb
(3.1.2) Thicdicarb
(3.1.3) Ethiofencarb

(3.1.4) Aldicarb
(3.1.5) Propoxur
(3.2.1) Azinphos-methyl
(3.2.2) Azinphos-ethyl
(3.2.3) Phoxim
(3.2.4) Prothiophos
(4.1.1) Beta-Cyfluthrin
(4.1.2) Cyfluthrin
(4.1.3) Deltamethrin
(4.1.4) Tau-Fluvalinate
(4.1.5) Eflusilanate
(4.2.1) Indoxacarb
(5.1.1) Spinosad
(6.1.1) Endosulfan
(6.2.1) Fipronil
(6.2.2) Ethiprole
(7.1.1) Emamectin-benzoate
(8.1.1) Pyriproxifen
(9.1.1) Methoxyfenozide
(10.1.1) Triflumuron
(10.1.2) Flufenoxuron
(13.1.1 )Tebufenpyrad
(13.2.1) Hydramethylone
(14.1.1) Rotenone
(17.1.1) Spirodiclofen
(17.1.2) Spiromesifen
(17.2.1) 3-(2,5-Dimethylphenyl)-8-methoxy-2-oxo-1-azaspiro[4.5]dec-3-en-4-yl ethyl carbonate
(18.1.1) Flonicamid
(19.1.1 )Amitraz
(20.1.1) Propargite
(21.1.1 ) $N^2$-[1,1-Dimethyl-2-(methylsulfonyl)ethyl]-3-iod-$N^1$-[2-methyl-4-[1,2,2,2-tetrafluor-1-(trifluormethyl) ethyl]phenyl]-1,2-benzenedicarboxamide

**5.** Wirkstoffkombinationen gemäß einem der Ansprüche 1 bis 4 enthaltend das Carboxamid (1-1) 5-Fluor-1,3-dimethyl-*N*-[2-(3-methylbutyl)-*1H*-pyrazol-4-carboxamid (Gruppe 1).

**6.** Wirkstoffkombinationen gemäß einem der Ansprüche 1 bis 4 enthaltend das Carboxamid (1-2) 3-(Difluormethyl)-*N*-[2-(3,3-dimethylbutyl)-4-fluorphenyl]-1-methyl-*1H*-pyrazol-4-carboxamid (Gruppe 1).

**7.** Wirkstoffkombüiationen gemäß einem der Ansprüche 1 bis 4 enthaltend das Carboxamid (1-3) 3-(Difluormethyl)-*N*-[2-(3,3-dimethylbutyl)phenyl]-1-methy-*1H*-pyrazol-4-carboxamid (Gruppe 1).

**8.** Wirkstoffkombinationen gemäß einem der Ansprüche 1 bis 4 enthaltend das Carboxamid (1-4) *N*-[2-(3,3-Dimethylbutyl)phenyl]-2-(trifluormethyl)benzamid (Gruppe 1).

**9.** Wirkstoffkombinationen gemäß einem der Ansprüche 1 bis 4 enthaltend das Carboxamid (1-5) *N*-[2-(3,3-Dimethylbutyl)-4-fluorphenyl]-2-methyl-4-(trifluormethyl)-1,3-thiazol-5-carboxamid (Gruppe 1).

**10.** Wirkstoffkombinationen gemäß einem der Ansprüche 1 bis 4 enthaltend das Carboxamid (1-6) *N*-[2-(3,3-Dimethylbutyl)phenyl]-3-methylthiophen-2-carboxamid (Gruppe 1).

**12.** Verwendung von Wirkstoffkombinationen gemäß einem der Ansprüche 1 bis 10 zum Bekämpfung von unerwünschten tierischen Schädlingen sowie unerwünschten phytopathogenen Pilzen.

**13.** Verwendung von Wirkstoffkombinationen gemäß einem der Ansprüche 1 bis 10 zur Behandlung von Saatgut.

**14.** Verwendung von Wirkstoffkombinationen gemäß einem der Ansprüche 1 bis 10 zur Behandlung von transgenen Pflanzen.

**15.** Verwendung von Wirkstoffkombinationen gemäß einem der Ansprüche 1 bis 10 zur Behandlung von Saatgut transgener Pflanzen.

**16.** Saatgut, welches mit einer Wirkstoffkombination gemäß einem der Ansprüche 1 bis 10 behandelt wurde.

**17.** Verfahren zum Bekämpfen von unerwünschten tierischen Schädlingen sowie unerwünschten phytopathogenen Pilzen, **dadurch gekennzeichnet, dass** man Wirkstoffkombinationen gemäß einem der Ansprüche 1 bis 10 auf die unerwünschten phytopathogenen Pilze und/oder deren Lebensraum und/oder Saatgut ausbringt.

**18.** Verfahren zum Herstellen von fungiziden, insektiziden und akariziden Mitteln, **dadurch gekennzeichnet, dass** man Wirkstoffkombinationen gemäß einem der Ansprüche 1 bis 10 mit Streckmitteln und/ oder oberflächenaktiven Stoffen vermischt.

**19.** Verfahren zum Schutz von Saatgütern vor unerwünschten tierischen Schädlingen sowie unerwünschten phytopathogenen Pilzen umfassend die Behandlung des Saatguts mit einer Wirkstoffkombination gemäß einem der Ansprüche 1 bis 10.

Europäisches Patentamt

# EUROPÄISCHER RECHERCHENBERICHT

Nummer der Anmeldung
EP 07 01 1095

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/114212 A (BAYER CROPSCIENCE AG [DE]; SUTY-HEINZE ANNE [DE]; HUNGENBERG HEIKE [DE) 2. November 2006 (2006-11-02)<br>* das ganze Dokument *<br>----- | 1-19 | INV.<br>A01N43/56<br>A01N37/22<br>A01N61/00<br>A01N51/00<br>A01N47/02<br>A01N43/22<br>A01N47/22<br>A01N47/24<br>A01P7/00 |
| D,X | WO 2005/042494 A (BAYER CROPSCIENCE AG [DE]; DUNKEL RALF [DE]; ELBE HANS-LUDWIG [DE]; GR) 12. Mai 2005 (2005-05-12)<br>* Seite 1, Zeilen 6-19 *<br>* Seite 9, Zeile 21 *<br>* Seite 44, Zeile 19 *<br>* Seite 45, Zeile 30 - Seite 47, Zeile 18 *<br>* Beispiele A-E; Tabellen A-E *<br>----- | 1-19 | |
| X | WO 2005/075411 A (BAYER CROPSCIENCE AG [DE]; DUNKEL RALF [DE]; ELBE HANS-LUDWIG [DE]; HA) 18. August 2005 (2005-08-18)<br>* Seite 1, Zeilen 6-20 *<br>* Seite 8, Zeilen 35,36 *<br>* Seite 12, Zeile 6 *<br>* Seite 43, Zeile 17 *<br>* Seite 44, Zeile 27 - Seite 47, Zeile 26 *<br>* Beispiele A-E; Tabellen A-E *<br>----- | 1-19 | RECHERCHIERTE SACHGEBIETE (IPC)<br>A01N |

Der vorliegende Recherchenbericht wurde für alle Patentansprüche erstellt

1

| Recherchenort | Abschlußdatum der Recherche | Prüfer |
|---|---|---|
| München | 7. Februar 2008 | Klaver, Jos |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 07 01 1095

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2008

| Im Recherchenbericht angeführtes Patentdokument | Datum der Veröffentlichung | Mitglied(er) der Patentfamilie | Datum der Veröffentlichung |
|---|---|---|---|
| WO 2006114212 A | 02-11-2006 | AR 053716 A1 | 16-05-2007 |
| | | AU 2006239579 A1 | 02-11-2006 |
| | | CA 2606230 A1 | 02-11-2006 |
| | | DE 102005022147 A1 | 02-11-2006 |
| | | EP 1876897 A2 | 16-01-2008 |
| WO 2005042494 A | 12-05-2005 | AR 046776 A1 | 21-12-2005 |
| | | AU 2004285636 A1 | 12-05-2005 |
| | | BR PI0415848 A | 02-01-2007 |
| | | CA 2543054 A1 | 12-05-2005 |
| | | EP 1680407 A1 | 19-07-2006 |
| | | JP 2007509089 T | 12-04-2007 |
| | | MX PA06004308 A | 05-06-2006 |
| | | US 2007004921 A1 | 04-01-2007 |
| WO 2005075411 A | 18-08-2005 | AR 047526 A1 | 25-01-2006 |
| | | BR PI0507507 A | 26-06-2007 |
| | | CA 2559396 A1 | 18-08-2005 |
| | | CN 1942431 A | 04-04-2007 |
| | | DE 102004005786 A1 | 25-08-2005 |
| | | EP 1716099 A1 | 02-11-2006 |
| | | JP 2007520500 T | 26-07-2007 |
| | | KR 20060134096 A | 27-12-2006 |
| | | US 2007203148 A1 | 30-08-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005042494 A
- US 2758115 A
- US 3309266 A
- GB 1181657 A
- WO 9322297 A1
- WO 9310083 A1
- DE 2641343 A1
- EP 347488 A1
- EP 210487 A1
- US 3264177 A
- EP 234045 A2
- WO 9637494 A
- WO 9825923 A
- US 4272417 A
- US 4245432 A
- US 4808430 A
- US 5876739 A
- US 20030176428 A1
- WO 2002080675 A1
- WO 2002028186 A2


### In der Beschreibung aufgeführte Nicht-Patentliteratur


- **S.R. COLBY.** Calculating Synergistic and Antagonistic Responses of Herbicide Combinations. *Weeds,* 1967, vol. 15, 20-22